(19) Europäisches Patentamt / European Patent Office / Office européen des brevets

(11) **EP 4 311 179 A1**

(12) **EUROPEAN PATENT APPLICATION**
published in accordance with Art. 153(4) EPC

(43) Date of publication:
**24.01.2024 Bulletin 2024/04**

(21) Application number: **22779170.4**

(22) Date of filing: **02.04.2022**

(51) International Patent Classification (IPC):
**H04L 27/34** (2006.01) **H04L 1/00** (2006.01)

(52) Cooperative Patent Classification (CPC):
**H04L 1/00; H04L 27/34; Y02D 30/70**

(86) International application number:
**PCT/CN2022/085021**

(87) International publication number:
**WO 2022/206990 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.04.2021 CN 202110362864**

(71) Applicant: **Huawei Technologies Co., Ltd.**
**Longgang**
**Shenzhen, Guangdong 518129 (CN)**

(72) Inventors:
• **QU, Weilin**
  **Shenzhen, Guangdong 518129 (CN)**
• **LUO, Zhihu**
  **Shenzhen, Guangdong 518129 (CN)**
• **YANG, Yubo**
  **Shenzhen, Guangdong 518129 (CN)**
• **JIN, Zhe**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **DATA TRANSMISSION METHOD AND APPARATUS**

(57) This application discloses a data transmission method and an apparatus. The method includes: A network device generates downlink control information DCI. The DCI can indicate a first modulation scheme or a second modulation scheme, or can indicate only a second modulation scheme. The DCI includes a modulation and coding scheme MCS field. The DCI indicates the first modulation scheme when the MCS field is in a first state, or the DCI indicates the second modulation scheme and an MCS index of the second modulation scheme when the MCS field is in a second state. The network device sends the DCI. A terminal receives the downlink control information DCI, and receives or sends data based on the DCI. In embodiments of this application, the first modulation scheme, the second modulation scheme, and the MCS index of the second modulation scheme are indicated by using different states in the MCS field, to support a new modulation scheme without increasing DCI overheads.

FIG. 2A

## Description

This application claims priority to Chinese Patent Application No. 202110362864.8, filed with the China National Intellectual Property Administration on April 2, 2021 and entitled "DATA TRANSMISSION METHOD AND APPARATUS", which is incorporated herein by reference in its entirety.

## TECHNICAL FIELD

This application relates to the field of communication technologies, and in particular, to a data transmission method and an apparatus.

## BACKGROUND

Internet of things (Internet of Things, IoT) is a network oriented to machine type communication (Machine Type Communication, MTC), and is an important network in the future communication field. Internet of things communication is mainly applied to smart metering, medical detection and monitoring, logistics detection, industrial detection and monitoring, internet of vehicles, intelligent community, wearable-device communication, and the like. Because application scenarios of internet of things are diverse from outdoor to indoor, and from overground to underground, many special requirements including coverage enhancement, a large quantity of terminals, a low service rate requirement, insensitivity to a delay, extremely low costs, low power consumption, and the like are imposed on design of internet of things.

To meet these special requirements, the 3rd Generation Partnership Project (3rd Generation Partnership Project, 3GPP) approves a new research topic to investigate a method for supporting internet of things with extremely low complexity and low costs in a cellular network, and initiates a topic of narrowband internet of things (Narrowband Internet of Things, NB-IoT).

Currently, a modulation scheme supported by NB-IoT in downlink is quadrature phase shift keying (Quadrature Phase Shift Keying, QPSK), and a modulation scheme supported by NB-IoT in uplink is binary phase shift keying (binary phase shift keying, BPSK) and the QPSK. NB-IoT can support a low-speed internet of things service. During data transmission, new modulation schemes such as 16 quadrature amplitude modulation (16 quadrature amplitude modulation, 16QAM) and 64QAM are considered, to improve a data transmission rate and support a higher-speed internet of things service. How downlink control information (Downlink control information, DCI) supports scheduling in a new modulation scheme is an urgent problem to be resolved.

## SUMMARY

Embodiments of this application provide a data transmission method and an apparatus, to support a new modulation scheme.

According to a first aspect, a data transmission method is provided. The method includes: generating downlink control information DCI, where the DCI can indicate a first modulation scheme or a second modulation scheme, or can indicate only a second modulation scheme, the DCI includes a modulation and coding scheme MCS field, and the DCI indicates the first modulation scheme when the MCS field is in a first state, or the DCI indicates the second modulation scheme and an MCS index of the second modulation scheme when the MCS field is in a second state; and sending the DCI.

It can be learned that, in this embodiment of this application, the first modulation scheme, the second modulation scheme, and the MCS index of the second modulation scheme are indicated by using different states in the MCS field, to support a new modulation scheme (the first modulation scheme) without increasing DCI overheads.

It should be noted that, that the DCI can indicate only the second modulation scheme means that the DCI can indicate only one of the two modulation schemes, and the DCI further indicates other information.

In a possible example, when the DCI indicates only the second modulation scheme, the DCI further includes a repetition field, and the repetition field is N bits, where N is a positive integer; when the DCI indicates the first modulation scheme or the second modulation scheme, the DCI further includes K bits indicating an MCS index of the first modulation scheme, where K is a positive integer and K is less than or equal to N; and the DCI further includes a repetition field, and the repetition field is less than or equal to N-K bits; or the DCI does not include a repetition field.

In a possible example, K is 3 bits, and/or N is 3 bits when the DCI schedules uplink transmission, or N is 4 bits when the DCI schedules downlink transmission.

In this embodiment of this application, for a terminal supporting an NB-IoT capability of the first modulation scheme, when the DCI can indicate only the second modulation scheme, a bit indicating the repetition field in the DCI becomes less or even disappears. In this way, the DCI includes a bit indicating an MCS field of the first modulation scheme, so that the DCI can support scheduling in both the first modulation scheme and the second modulation scheme. This process avoids increasing DCI overheads, and ensures DCI transmission efficiency.

In a possible example, the DCI is control information scrambled by using a PUR-RNTI, and the DCI further includes an acknowledgment feedback or fallback indication field.

In this embodiment of this application, when the downlink control information is the control information scrambled by using the PUR-RNTI, the new modulation scheme (the first modulation scheme) may be supported without increasing overheads of the downlink control information.

In a possible example, the DCI is the control information scrambled by using the PUR-RNTI. When the DCI indicates the first modulation scheme, the DCI further includes a field indicating an MCS index of the first modulation scheme, and the DCI does not include a repetition adjustment field.

In this embodiment of this application, when the DCI scrambled by using the PUR-RNTI can indicate only the second modulation scheme, a bit indicating the repetition adjustment field in the DCI becomes less or even disappears, and a field indicating the MCS index of the first modulation scheme is obtained by dividing the DCI, so that the DCI can support scheduling in both the first modulation scheme and the second modulation scheme. This process avoids increasing DCI overheads, and ensures DCI transmission efficiency.

In a possible example, the MCS field is 4 bits.

In a possible example, the first state is "1111", and the second state is a state other than 1111 and 1110 in "0000-1111".

In a possible example, the first modulation scheme is 16 quadrature amplitude modulation QAM, and the second modulation scheme is quadrature phase shift keying QPSK.

According to a second aspect, a data transmission method is provided. The method includes: receiving downlink control information DCI, where the DCI includes a modulation and coding scheme MCS field, and the DCI indicates a first modulation scheme when the MCS field is in a first state, or the DCI indicates a second modulation scheme and an MCS index of the second modulation scheme when the MCS field is in a second state; and receiving or sending data based on the DCI.

In a possible example, when the DCI indicates only the second modulation scheme, the DCI further includes a repetition field, and the repetition field is N bits, where N is a positive integer; when the DCI indicates the first modulation scheme or the second modulation scheme, the DCI further includes K bits indicating an MCS index of the first modulation scheme, where K is a positive integer and K is less than or equal to N; and the DCI further includes a repetition field, and the repetition field is less than or equal to N-K bits; or the DCI does not include a repetition field.

In a possible example, K is 3 bits, and/or N is 3 bits when the DCI schedules uplink transmission, or N is 4 bits when the DCI schedules downlink transmission.

In a possible example, the DCI is control information scrambled by using a PUR-RNTI, and the DCI further includes an acknowledgment feedback or fallback indication field.

In a possible example, the DCI is the control information scrambled by using the PUR-RNTI. When the DCI indicates the first modulation scheme, the DCI further includes a field indicating an MCS index of the first modulation scheme, and the DCI does not include a repetition adjustment field.

In a possible example, the MCS field is 4 bits.

In a possible example, the first state is "1111", and the second state is a state other than 1111 and 1110 in "0000-1111".

In a possible example, the first modulation scheme is 16 quadrature amplitude modulation QAM, and the second modulation scheme is quadrature phase shift keying QPSK.

In a possible example, the receiving or sending data based on the DCI includes: receiving or sending the data based on the first modulation scheme and the MCS index of the first modulation scheme that are indicated by the DCI, or the second modulation scheme and the MCS index of the second modulation scheme that are indicated by the DCI.

According to a third aspect, a data transmission method is provided. The method includes: generating downlink control information DCI, where the DCI is control information scrambled by using a PUR-RNTI, the DCI includes an acknowledgment feedback or fallback indication field, the DCI includes a modulation and coding scheme MCS field, and when the MCS field is in a first state, the DCI includes a first modulation scheme indication field indicating a first modulation scheme; and sending the DCI.

In this embodiment of this application, for the DCI scrambled by using the PUR-RNTI, a reserved bit in the DCI may be used to support scheduling in a new modulation scheme without increasing downlink control information overheads. This avoids increasing the DCI overheads.

In a possible example, when the MCS field is in a second state, a first modulation scheme is indicated by using a redundancy state in a subcarrier indication field.

In this embodiment of this application, for the DCI scrambled by using the PUR-RNTI, on a premise that the DCI keeps indicating an MCS index of a second modulation scheme (lower-order modulation), an MCS index of the first modulation scheme (a new modulation scheme) is indicated by using the redundancy state in the subcarrier indication field, to avoid increasing the DCI overheads, and implement simultaneous indication of two different modulation schemes. In this way, during switching of a modulation scheme for data scheduled by the DCI, a network device does not need to re-deliver the DCI. This improves data scheduling efficiency by the DCI.

In a possible example, the DCI is the control information scrambled by using the PUR-RNTI. When the DCI indicates the first modulation scheme, the DCI further includes a field indicating an MCS index of the first modulation scheme, and the DCI does not include a repetition adjustment field.

In a possible example, the first state is "1110", and the second state is a state other than 1111 and 1110 in "0000-1111".

According to a fourth aspect, a data transmission method is provided. The method includes: receiving downlink control information DCI, where the DCI is control information scrambled by using a PUR-RNTI, the DCI includes an acknowledgment feedback or fallback indication field, the DCI includes a modulation and coding scheme MCS field, and when the MCS field is in a first state, the DCI includes a first modulation scheme indication field indicating a first modulation scheme; and receiving or sending data based on the DCI.

In a possible example, when the MCS field is in a second state, a first modulation scheme is indicated by using a redundancy state in a subcarrier indication field.

In a possible example, the DCI is the control information scrambled by using the PUR-RNTI. When the DCI indicates the first modulation scheme, the DCI further includes a field indicating an MCS index of the first modulation scheme, and the DCI does not include a repetition adjustment field.

In a possible example, the first state is "1110", and the second state is a state other than 1111 and 1110 in "0000-1111".

In a possible example, the receiving or sending data based on the DCI includes: receiving or sending the data based on the first modulation scheme and the MCS index of the first modulation scheme that are indicated by the DCI.

According to a fifth aspect, a data transmission method is provided. The method includes: generating downlink control information DCI, where the DCI includes a modulation and coding scheme MCS field and a repetition field, the DCI indicates an MCS index of a first modulation scheme or an MCS index of a second modulation scheme, and when the DCI indicates only the MCS index of the second modulation scheme, the MCS field is N1 bits and the repetition field is N2 bits, or when the DCI indicates the MCS index of the first modulation scheme or the MCS index of the second modulation scheme, the MCS field is N1+1 bits and the repetition field is less than or equal to N2-1 bits; or the DCI does not include a repetition field; and sending the DCI.

In this embodiment of this application, when a bit value included in the downlink control information remains unchanged, compared with a case in which the downlink control information indicates only an MCS field of the second modulation scheme, 1 bit is added to the MCS field and a bit is reduced from the repetition field when the downlink control information indicates an MCS field of the first modulation scheme or an MCS field of the second modulation scheme. In this way, there are sufficient states in the MCS field to support both the MCS field of the first modulation scheme and the MCS field of the second modulation scheme. This process avoids increasing DCI overheads, and ensures DCI transmission efficiency.

In a possible example, the first modulation scheme is 16QAM, and the second modulation scheme is quadrature phase shift keying QPSK.

In a possible example, N1 is 4 bits, and/or N2 is 3 bits when the DCI schedules uplink transmission, or N2 is 4 bits when the DCI schedules downlink transmission.

According to a sixth aspect, a data transmission method is provided. The method includes: receiving downlink control information DCI, where the DCI includes a modulation and coding scheme MCS field and a repetition field, the DCI indicates an MCS index of a first modulation scheme or an MCS index of a second modulation scheme, and when the DCI indicates only the MCS index of the second modulation scheme, the MCS field is N1 bits and the repetition field is N2 bits, or when the DCI indicates the MCS index of the first modulation scheme or the MCS index of the second modulation scheme, the MCS field is N1+1 bits and the repetition field is N2-1 bits; and receiving or sending data based on the DCI.

In a possible example, the first modulation scheme is 16QAM, and the second modulation scheme is quadrature phase shift keying QPSK.

In a possible example, N1 is 4 bits, and/or N2 is 3 bits when the DCI schedules uplink transmission, or N2 is 4 bits when the DCI schedules downlink transmission.

In a possible example, the receiving or sending data based on the DCI includes: receiving or sending the data based on an MCS field, indicated by the DCI, of the first modulation scheme or an MCS field, indicated by the DCI, of the second modulation scheme.

According to a seventh aspect, a data transmission method is provided. The method includes: sending a first message, where the first message includes first indication information that indicates a terminal to use a first modulation scheme and indicates a modulation and coding scheme MCS index corresponding to the first modulation scheme, or indicates a terminal to use a second modulation scheme and indicates an MCS index corresponding to the second modulation scheme, and the first message is a random access response message for the terminal; and a subcarrier spacing configured by a network device for the terminal is 15 kHz, and a subcarrier indication index is greater than 11;

receiving a second message, where the second message uses a modulation scheme indicated by the first indication information, and the second message includes a radio resource control RRC connection establishment request message; and/or sending a third message, where the third message uses a modulation scheme indicated by the first indication information, and the third message includes a message for carrying a contention resolution identifier.

In this embodiment of this application, when a random access response is sent, the first modulation scheme or the second modulation scheme is indicated, to trigger the RRC connection establishment request information or the message for carrying the contention resolution identifier to use the first modulation scheme (a new modulation scheme) in a subsequent random access process; that is, the new modulation scheme is supported. This can effectively improve an information transmission rate and spectrum resource utilization in the random access process.

In a possible example, before the first message is sent, the method further includes: receiving a fourth message, where the fourth message includes a random access preamble sequence; and determining, based on a modulation scheme corresponding to the fourth message, a modulation scheme indicated by the fourth message.

In a possible example, the preamble sequence is an early data transmission EDT preamble sequence.

In this embodiment of this application, the preamble sequence is the EDT preamble sequence. In this case, the received second message further includes uplink data in addition to the RRC connection establishment request information. The second message is transmitted in the first modulation scheme, so that a transmission rate of the uplink data can be improved.

In a possible example, when the first indication information indicates the first modulation scheme, the method further includes: sending first configuration information. The first configuration information includes at least one TBS value, and the at least one TBS value is greater than a maximum TBS value of the second modulation scheme.

In a possible example, the first modulation scheme is 16QAM, and the second modulation scheme is QPSK.

According to an eighth aspect, a data transmission method is provided. The method includes: receiving a first message, where the first message includes first indication information that indicates a terminal to use a first modulation scheme and indicates a modulation and coding scheme MCS index corresponding to the first modulation scheme, or indicates a terminal to use a second modulation scheme and indicates an MCS index corresponding to the second modulation scheme, and the first message is a random access response message for the terminal; sending a second message, where the second message uses a modulation scheme indicated by the first indication information, and the second message includes a radio resource control RRC connection establishment request message; and/or receiving a third message, where the third message uses a modulation scheme indicated by the first indication information, and the third message includes a message for carrying a contention resolution identifier.

In a possible example, before the first message is sent, the method further includes: sending a fourth message, where the fourth message includes a random access preamble sequence, and a modulation scheme corresponding to the fourth message is the first modulation scheme or the second modulation scheme.

In a possible example, the preamble sequence is an early data transmission EDT preamble sequence.

In a possible example, when the first indication information indicates the first modulation scheme, the method further includes: receiving first configuration information. The first configuration information includes at least one TBS value, and the at least one TBS value is greater than a maximum TBS value of the second modulation scheme.

In a possible example, the first modulation scheme is 16QAM, and the second modulation scheme is QPSK.

According to a ninth aspect, a communication apparatus is provided. The apparatus includes:

a processing unit, configured to generate downlink control information DCI, where the DCI includes a modulation and coding scheme MCS field, and the DCI indicates a first modulation scheme when the MCS field is in a first state, or the DCI indicates a second modulation scheme and an MCS index of the second modulation scheme when the MCS field is in a second state; and
a sending unit, configured to send the DCI.

In a possible example, when the DCI indicates only the second modulation scheme, the DCI further includes a repetition field, where the repetition field is N bits, N is a positive integer, when the DCI indicates the first modulation scheme or the second modulation scheme, the DCI further includes K bits indicating an MCS index of the first modulation scheme, and K is a positive integer and K is less than or equal to N; the DCI further includes a repetition field, and the repetition field is less than or equal to N-K bits; or the DCI does not include a repetition field.

In a possible example, K is 3 bits, and/or N is 3 bits when the DCI schedules uplink transmission, or N is 4 bits when the DCI schedules downlink transmission.

In a possible example, the DCI is control information scrambled by using a PUR-RNTI, and the DCI further includes an acknowledgment feedback or fallback indication field.

In a possible example, the DCI is the control information scrambled by using the PUR-RNTI. When the DCI indicates the first modulation scheme, the DCI further includes a field indicating an MCS index of the first modulation scheme, and the DCI does not include a repetition adjustment field.

In a possible example, the MCS field is 4 bits.

In a possible example, the first state is "1111", and the second state is a state other than 1111 and 1110 in "0000-1111".

In a possible example, the first modulation scheme is 16 quadrature amplitude modulation QAM, and the second modulation scheme is quadrature phase shift keying QPSK.

According to a tenth aspect, a communication apparatus is provided. The apparatus includes:

> a processing unit, configured to receive downlink control information DCI, where the DCI includes a modulation and coding scheme MCS field, and the DCI indicates a first modulation scheme when the MCS field is in a first state, or the DCI indicates a second modulation scheme and an MCS index of the second modulation scheme when the MCS field is in a second state; and
> a transceiver unit, configured to receive or send data based on the DCI.

In a possible example, when the DCI indicates only the second modulation scheme, the DCI further includes a repetition field, where the repetition field is N bits, N is a positive integer, when the DCI indicates the first modulation scheme or the second modulation scheme, the DCI further includes K bits indicating an MCS index of the first modulation scheme, and K is a positive integer and K is less than or equal to N; the DCI further includes a repetition field, and the repetition field is less than or equal to N-K bits; or the DCI does not include a repetition field.

In a possible example, K is 3 bits, and/or N is 3 bits when the DCI schedules uplink transmission, or N is 4 bits when the DCI schedules downlink transmission.

In a possible example, the DCI is control information scrambled by using a PUR-RNTI, and the DCI further includes an acknowledgment feedback or fallback indication field.

In a possible example, the DCI is the control information scrambled by using the PUR-RNTI. When the DCI indicates the first modulation scheme, the DCI further includes a field indicating an MCS index of the first modulation scheme, and the DCI does not include a repetition adjustment field.

In a possible example, the MCS field is 4 bits.

In a possible example, the first state is "1111", and the second state is a state other than 1111 and 1110 in "0000-1111".

In a possible example, the first modulation scheme is 16 quadrature amplitude modulation QAM, and the second modulation scheme is quadrature phase shift keying QPSK.

In a possible example, the transceiver unit is specifically configured to receive or send the data based on the first modulation scheme and the MCS index of the first modulation scheme that are indicated by the DCI, or the second modulation scheme and the MCS index of the second modulation scheme that are indicated by the DCI.

According to an eleventh aspect, a communication apparatus is provided. The apparatus is configured to perform: generating downlink control information DCI, where the DCI is control information scrambled by using a PUR-RNTI, the DCI includes an acknowledgment feedback or fallback indication field, the DCI includes a modulation and coding scheme MCS field, and when the MCS field is in a first state, the DCI includes a first modulation scheme indication field indicating a first modulation scheme; and sending the DCI.

In this embodiment of this application, for the DCI scrambled by using the PUR-RNTI, a reserved bit in the DCI may be used to support scheduling in a new modulation scheme without increasing downlink control information overheads. This avoids increasing the DCI overheads.

In a possible example, when the MCS field is in a second state, a first modulation scheme is indicated by using a redundancy state in a subcarrier indication field.

In this embodiment of this application, for the DCI scrambled by using the PUR-RNTI, on a premise that the DCI keeps indicating an MCS index of a second modulation scheme, an MCS index of the first modulation scheme (a new modulation scheme) is indicated by using the redundancy state in the subcarrier indication field, to avoid increasing the DCI overheads, and implement simultaneous indication of two different modulation schemes. In this way, during switching of a modulation scheme for data scheduled by the DCI, a network device does not need to re-deliver the DCI. This improves data scheduling efficiency by the DCI.

In a possible example, the DCI is the control information scrambled by using the PUR-RNTI. When the DCI indicates the first modulation scheme, the DCI further includes a field indicating an MCS index of the first modulation scheme, and the DCI does not include a repetition adjustment field.

In a possible example, the first state is "1110", and the second state is a state other than 1111 and 1110 in "0000-1111".

According to a twelfth aspect, a data transmission apparatus is provided. The apparatus includes:

> a transceiver unit, configured to receive downlink control information DCI, where the DCI is control information scrambled by using a PUR-RNTI, the DCI includes an acknowledgment feedback or fallback indication field, the DCI includes a modulation and coding scheme MCS field, and when the MCS field is in a first state, the DCI includes a first modulation scheme indication field indicating a first modulation scheme; and

a processing unit, configured to receive or send data based on the DCI in combination with the transceiver unit.

In a possible example, when the MCS field is in a second state, a first modulation scheme is indicated by using a redundancy state in a subcarrier indication field.

In a possible example, the DCI is the control information scrambled by using the PUR-RNTI. When the DCI indicates the first modulation scheme, the DCI further includes a field indicating an MCS index of the first modulation scheme, and the DCI does not include a repetition adjustment field.

In a possible example, the first state is "1110", and the second state is a state other than 1111 and 1110 in "0000-1111".

In a possible example, the processing unit is specifically configured to receive or send the data based on the first modulation scheme and the MCS index of the first modulation scheme that are indicated by the DCI.

According to a thirteenth aspect, a data transmission apparatus is provided. The apparatus includes:

a processing unit, configured to generate downlink control information DCI, where the DCI includes a modulation and coding scheme MCS field and a repetition field, the DCI indicates an MCS index of a first modulation scheme or an MCS index of a second modulation scheme, and when the DCI indicates only the MCS index of the second modulation scheme, the MCS field is N1 bits and the repetition field is N2 bits, or when the DCI indicates the MCS index of the first modulation scheme or the MCS index of the second modulation scheme, the MCS field is N1+1 bits and the repetition field is less than or equal to N2-1 bits; or the DCI does not include a repetition field; and

a sending unit, configured to send the DCI.

In a possible example, the first modulation scheme is 16QAM, and the second modulation scheme is quadrature phase shift keying QPSK.

In a possible example, N1 is 4 bits, and/or N2 is 3 bits when the DCI schedules uplink transmission, or N2 is 4 bits when the DCI schedules downlink transmission.

According to a fourteenth aspect, a data transmission apparatus is provided. The apparatus includes:

a transceiver unit, configured to receive downlink control information DCI, where the DCI includes a modulation and coding scheme MCS field and a repetition field, the DCI indicates an MCS index of a first modulation scheme or an MCS index of a second modulation scheme, and when the DCI indicates only the MCS index of the second modulation scheme, the MCS field is N1 bits and the repetition field is N2 bits, or when the DCI indicates the MCS index of the first modulation scheme or the MCS index of the second modulation scheme, the MCS field is N1+1 bits and the repetition field is N2-1 bits; and

a processing unit, configured to receive or send data based on the DCI in combination with the transceiver unit.

In a possible example, the first modulation scheme is 16QAM, and the second modulation scheme is quadrature phase shift keying QPSK.

In a possible example, N1 is 4 bits, and/or N2 is 3 bits when the DCI schedules uplink transmission, or N2 is 4 bits when the DCI schedules downlink transmission.

In a possible example, the receiving or sending data based on the DCI includes: receiving or sending the data based on an MCS field, indicated by the DCI, of the first modulation scheme or an MCS field, indicated by the DCI, of the second modulation scheme.

According to a fifteenth aspect, a data transmission apparatus is provided. The apparatus includes:

a sending unit, configured to send a first message, where the first message includes first indication information that indicates a terminal to use a first modulation scheme and indicates a modulation and coding scheme MCS index corresponding to the first modulation scheme, or indicates a terminal to use a second modulation scheme and indicates an MCS index corresponding to the second modulation scheme, and the first message is a random access response message for the terminal; and

a receiving unit, configured to receive a second message, where the second message uses a modulation scheme indicated by the first indication information, and the second message includes a radio resource control RRC connection establishment request message; and the sending unit is further configured to send a third message, where the third message uses a modulation scheme indicated by the first indication information, and the third message includes a message for carrying a contention resolution identifier.

In a possible example, before the first message is sent, the receiving unit is further configured to: receive a fourth message, where the fourth message includes a random access preamble sequence; and determine, based on a modulation scheme corresponding to the fourth message, a modulation scheme indicated by the fourth message.

In a possible example, the preamble sequence is an early data transmission EDT preamble sequence.

In a possible example, when the first indication information indicates the first modulation scheme, the sending unit is further configured to send first configuration information. The first configuration information includes at least one TBS value, and the at least one TBS value is greater than a maximum TBS value of the second modulation scheme.

In a possible example, the first modulation scheme is 16QAM, and the second modulation scheme is QPSK.

According to a sixteenth aspect, a data transmission apparatus is provided. The apparatus includes:

a receiving unit, configured to receive a first message, where the first message includes first indication information that indicates a terminal to use a first modulation scheme and indicates a modulation and coding scheme MCS index corresponding to the first modulation scheme, or indicates a terminal to use a second modulation scheme and indicates an MCS index corresponding to the second modulation scheme, and the first message is a random access response message for the terminal; and

a sending unit, configured to send a second message, where the second message uses a modulation scheme indicated by the first indication information, and the second message includes a radio resource control RRC connection establishment request message; and/or

the receiving unit is further configured to receive a third message, where the third message uses a modulation scheme indicated by the first indication information, and the third message includes a message for carrying a contention resolution identifier.

In a possible example, before the first message is sent, the sending unit is further configured to send a fourth message, where the fourth message includes a random access preamble sequence, and a modulation scheme corresponding to the fourth message is the first modulation scheme or the second modulation scheme.

In a possible example, the preamble sequence is an early data transmission EDT preamble sequence.

In a possible example, when the first indication information indicates the first modulation scheme, the method further includes: receiving first configuration information. The first configuration information includes at least one TBS value, and the at least one TBS value is greater than a maximum TBS value of the second modulation scheme.

In a possible example, the first modulation scheme is 16QAM, and the second modulation scheme is QPSK.

According to a seventeenth aspect, an embodiment of this application provides a communication apparatus. The apparatus has functions of implementing any one of the possible implementations of the first aspect, the third aspect, the fifth aspect, and the seventh aspect.

The apparatus may be a network device, or may be a chip included in a network device. The functions of the communication apparatus may be implemented by hardware, or may be implemented by hardware by executing corresponding software. The hardware or the software includes one or more modules corresponding to the functions.

In a possible design, a structure of the apparatus includes a processing unit and a transceiver unit. The processing unit is configured to support the apparatus in performing the method according to any one of the fourth aspect or the possible implementations of the fourth aspect.

In another possible design, a structure of the apparatus includes a processor, and may further include a memory. The processor is coupled to the memory, and may be configured to execute computer program instructions stored in the memory, so that the apparatus performs the method according to any one of the first aspect, the third aspect, the fifth aspect, or the seventh aspect, or the possible implementations of the first aspect, the third aspect, the fifth aspect, or the seventh aspect. Optionally, the apparatus further includes a communication interface, and the processor is coupled to the communication interface. When the apparatus is the network device, the communication interface may be a transceiver or an input/output interface. When the apparatus is the chip included in the network device, the communication interface may be an input/output interface of the chip. Optionally, the transceiver may be a transceiver circuit, and the input/output interface may be an input/output circuit.

According to an eighteenth aspect, an embodiment of this application provides a communication apparatus. The apparatus has functions of implementing the terminal according to any possible implementation of the second aspect, the fourth aspect, the sixth aspect, or the eighth aspect.

The apparatus may be a terminal, or may be a chip included in a terminal. The functions of the communication apparatus may be implemented by hardware, or may be implemented by hardware by executing corresponding software. The hardware or the software includes one or more modules corresponding to the functions.

In a possible design, a structure of the apparatus includes a processing unit and a transceiver unit. The processing unit is configured to support the apparatus in performing the method according to any one of the fourth aspect or the possible implementations of the fourth aspect.

In another possible design, a structure of the apparatus includes a processor, and may further include a memory. The processor is coupled to the memory, and may be configured to execute computer program instructions stored in the memory, so that the apparatus performs the method according to any one of the fourth aspect or the possible implementations of the fourth aspect. Optionally, the apparatus further includes a communication interface, and the processor is coupled to the communication interface. When the apparatus is a network device, the communication interface may be a transceiver or an input/output interface. When the apparatus is a chip included in a network device, the communication interface may be an input/output interface of the chip. Optionally, the transceiver may be a transceiver circuit, and the input/output interface may be an input/output circuit.

According to a nineteenth aspect, an embodiment of this application provides a chip system, including a processor. The processor is coupled to a memory. The memory is configured to store a program or instructions. When the program or the instructions are executed by the processor, the chip system is enabled to implement the method according to any one of the first aspect, the third aspect, the fifth aspect, or the seventh aspect, or the possible implementations of the first aspect, the third aspect, the fifth aspect, or the seventh aspect.

Optionally, the chip system further includes an interface circuit, and the interface circuit is configured to exchange code instructions to the processor.

Optionally, there may be one or more processors in the chip system, and the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be respectively disposed on different chips. A type of the memory and a manner of disposing the memory and the processor are not specifically limited in this application.

According to a twentieth aspect, an embodiment of this application provides a chip system, including a processor. The processor is coupled to a memory. The memory is configured to store a program or instructions. When the program or the instructions are executed by the processor, the chip system is enabled to implement the method according to any one of the second aspect, the fourth aspect, the sixth aspect, or the eighth aspect, or the possible implementations of the second aspect, the fourth aspect, the sixth aspect, or the eighth aspect.

Optionally, the chip system further includes an interface circuit, and the interface circuit is configured to exchange code instructions to the processor.

Optionally, there may be one or more processors in the chip system, and the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be respectively disposed on different chips. A type of the memory and a manner of disposing the memory and the processor are not specifically limited in this application.

According to a twenty-first aspect, an embodiment of this application provides a computer-readable storage medium. The computer-readable storage medium stores a computer program or instructions. When the computer program or the instructions are executed, a computer is enabled to perform the method according to any one of the first aspect, the third aspect, the fifth aspect, or the seventh aspect, or the possible implementations of the first aspect, the third aspect, the fifth aspect, or the seventh aspect.

According to a twenty-second aspect, an embodiment of this application provides a computer program product. When a computer reads and executes the computer program product, the computer is enabled to perform the method according to any one of the second aspect, the fourth aspect, the sixth aspect, or the eighth aspect, or the possible implementations of the second aspect, the fourth aspect, the sixth aspect, or the eighth aspect.

According to a twenty-third aspect, an embodiment of this application provides a communication system. The communication system includes the apparatuses according to the ninth aspect and the tenth aspect, or the communication system includes the apparatuses according to the eleventh aspect and the twelfth aspect, or the communication system includes the apparatuses according to the thirteenth aspect and the fourteenth aspect, or the communication system includes the apparatuses according to the fifteenth aspect and the sixteenth aspect.

## BRIEF DESCRIPTION OF DRAWINGS

To describe the technical solutions in embodiments of this application or in the conventional technology more clearly, the following briefly describes the accompanying drawings used in describing embodiments.

FIG. 1 is a schematic diagram of a structure of a communication system according to an embodiment of this application;

FIG. 2A is a flowchart of a data transmission method according to an embodiment of this application;

FIG. 2B is a schematic diagram of a structure of DCI according to an embodiment of this application;

FIG. 2C is a schematic diagram of another structure of DCI according to an embodiment of this application;

FIG. 2D is a schematic diagram of another structure of DCI according to an embodiment of this application;

FIG. 3A is a flowchart of another data transmission method according to an embodiment of this application;

FIG. 3B is a schematic diagram of another structure of DCI according to an embodiment of this application;

FIG. 4A is a flowchart of another data transmission method according to an embodiment of this application;

FIG. 4B is a schematic diagram of a structure of DCI according to an embodiment of this application;

FIG. 5A is a flowchart of a data transmission method according to an embodiment of this application;

FIG. 5B is a schematic diagram of a random access process according to an embodiment of this application;

FIG. 6 is a block diagram of a structure of a communication apparatus according to an embodiment of this application;

FIG. 7 is a schematic diagram of a structure of a communication apparatus according to an embodiment of this application; and

FIG. 8 is a schematic diagram of a hardware structure of a communication apparatus according to an embodiment of this application.

## DESCRIPTION OF EMBODIMENTS

In the specification, claims, and accompanying drawings of this application, the terms "first", "second", "third", "fourth", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a specific feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

"A plurality of" means two or more. "and/or" describes an association relationship between associated objects and indicates that there may be three relationships. For example, A and/or B may represent the following three cases: Only A exists, both A and B exist, and only B exists. The character "/" generally represents an "or" relationship between the associated objects.

An application scenario in embodiments of this application is described first.

Embodiments of this application may be applied to a long term evolution (Long Term Evolution, LTE) system, for example, an NB-IoT system, or may be applied to another wireless communication system, for example, a global system for mobile communications (Global System for Mobile Communications, GSM), a universal mobile telecommunications system (Universal Mobile Telecommunications System, UMTS), a code division multiple access (Code Division Multiple Access, CDMA) system, and a new network device system.

A terminal device mentioned in embodiments of the present invention may be a device that provides a user with voice and/or data connectivity, a handheld device with a radio connection function, or another processing device connected to a radio modem. A wireless terminal may communicate with one or more core networks through a radio access network (Radio Access Network, RAN). The wireless terminal may be a mobile terminal, for example, a mobile phone (or referred to as a "cellular" phone) or a computer having a mobile terminal, for example, may be a portable, pocket-sized, handheld, computer built-in, or vehicle-mounted mobile apparatus, which exchanges a voice and/or data with the radio access network. The wireless terminal may be a device, for example, a personal communication service (Personal Communication Service, PCS) phone, a cordless telephone set, a session initiation protocol (SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile console (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

Embodiments of the present invention relate to a base station, and the base station may be configured to mutually convert a received over-the-air frame and an IP packet and may serve as a router between the wireless terminal and a remaining part of the access network. The remaining part of the access network may include an Internet Protocol (IP) network device. The base station may further coordinate attribute management of an air interface. For example, the base station may be a base transceiver station (Base Transceiver Station, BTS) in GSM or CDMA, or may be a NodeB (NodeB) in wideband code division multiple access (Wideband Code Division Multiple Access, WCDMA), or may be an evolved NodeB (eNB or e-NodeB, evolved NodeB) in LTE. This is not limited in embodiments of the present invention.

The following describes specific embodiments by using the LTE system as an example.

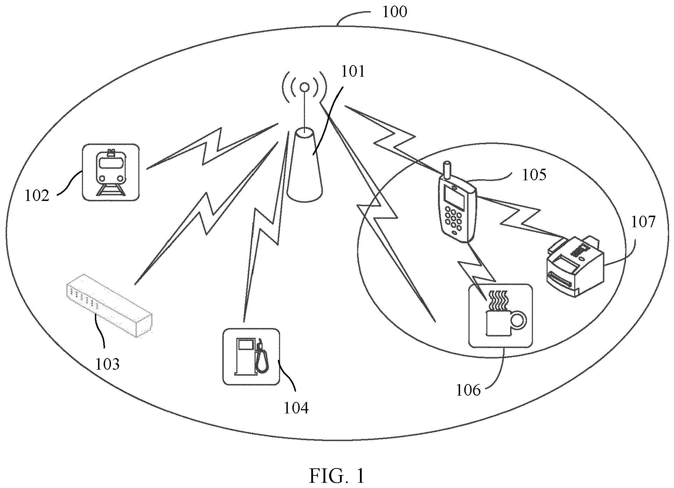

FIG. 1 is a schematic diagram of a structure of a communication system according to an embodiment of this application. As shown in FIG. 1, the system includes one network device 101 and six terminal devices. The six terminal devices are a terminal device 102, a terminal device 103, a terminal device 104, a terminal device 105, a terminal device 106, and a terminal device 107. In the example shown in FIG. 1, the terminal device 102 is a vehicle, the terminal device 103 is an intelligent air conditioner, the terminal device 104 is an intelligent fuel dispenser, the terminal device 105 is a mobile phone, the terminal device 106 is a smart teacup, and the terminal device 107 is a printer.

During communication between a terminal and the network device, the network device sends DCI through a physical downlink control channel (Physical Downlink Control Channel, PDCCH). The DCI is control information of a physical downlink shared channel (Physical Downlink Shared Channel, PDSCH) or a physical uplink shared channel (Physical Uplink Shared Channel, PDSCH). Specifically, the DCI includes resource block (Resource Block, RB) resource allocation information, a modulation and coding scheme (Modulation and coding scheme, MCS), a hybrid automatic repeat request identifier (Hybrid Automatic Repeat Request Identifier, HARQ-ID), and the like. The terminal can correctly process PDSCH data or PUSCH data only after correctly decoding the DCI information.

In NB-IoT, the DCI is carried in an NPDCCH, to perform uplink and downlink scheduling. ADCI format includes a DCI format N0 and a DCI format N1. The DCI format N0 is used to schedule an uplink NPUSCH, and the DCI format N1 is used to schedule a downlink NPDSCH. In embodiments of this application, the DCI format N0 is used as an example for description.

When the DCI format is the format N0, for content included in the DCI, refer to Table 1.1.

**Table 1.1**

| Content included in the DCI | Number of included bits (bit) |
|---|---|
| Flag for format NO/format N1 differentiation field | 1 |
| Subcarrier indication field | 6 |
| Resource allocation field | 3 |
| Scheduling delay field | 2 |
| MCS field | 4 |
| Redundancy version (Redundancy Version, RV) field | 1 |
| Repetition field | 3 |
| New data indicator field | 1 |
| DCI repetition field | 2 |

In Table 1.1, the flag for format NO/format N1 differentiation field indicates that the DCI format is N0 or N1. The format N0 is used for uplink scheduling, and the format N1 is used for downlink scheduling. By using the flag for format NO/format N1 differentiation field, the terminal device identifies whether the DCI format is the format N0 or the format N1, to determine whether the DCI is used for uplink scheduling or downlink scheduling. The flag for format NO/format N1 differentiation field may also be referred to as a DCI format flag field.

The subcarrier indication field indicates a set of consecutive subcarriers.

The scheduling delay field is used to determine a start time point of transmitting uplink data and/or signaling scheduled by the DCI.

The resource allocation field is used to determine allocation of uplink data and/or a signaling resource scheduled by the DCI, for example, allocation of a time domain resource.

A modulation and coding scheme field is used to determine an MCS index of uplink data and/or signaling scheduled by the DCI. A transport block size (transport block size, TBS) of the uplink data may be further determined based on the MCS field and a resource allocation field.

The repetition field is used to determine a repetition number of uplink data scheduled by the DCI. The new data indicator field indicates whether currently scheduled transmission is new transmission or retransmission.

The redundancy version field is used to determine a redundancy version for transmitting uplink data and/or signaling.

The DCI repetition field is used to determine a repetition number of the DCI.

For uplink transmission in NB-IoT, a specific TBS table is as follows:

**Table 1.2**

| $I_{TBS}$ | $I_{RU}$ | | | | | | | |
|---|---|---|---|---|---|---|---|---|
| | 0 | 1 | 2 | 3 | 4 | 5 | 6 | 7 |
| 0 | 16 | 32 | 56 | 88 | 120 | 152 | 208 | 256 |
| 1 | 24 | 56 | 88 | 144 | 176 | 208 | 256 | 344 |
| 2 | 32 | 72 | 144 | 176 | 208 | 256 | 328 | 424 |
| 3 | 40 | 104 | 176 | 208 | 256 | 328 | 440 | 568 |
| 4 | 56 | 120 | 208 | 256 | 328 | 408 | 552 | 680 |
| 5 | 72 | 144 | 224 | 328 | 424 | 504 | 680 | 872 |
| 6 | 88 | 176 | 256 | 392 | 504 | 600 | 808 | 1000 |
| 7 | 104 | 224 | 328 | 472 | 584 | 712 | 1000 | 1224 |
| 8 | 120 | 256 | 392 | 536 | 680 | 808 | 1096 | 1384 |
| 9 | 136 | 296 | 456 | 616 | 776 | 936 | 1256 | 1544 |
| 10 | 144 | 328 | 504 | 680 | 872 | 1000 | 1384 | 1736 |
| 11 | 176 | 376 | 584 | 776 | 1000 | 1192 | 1608 | 2024 |
| 12 | 208 | 440 | 680 | 1000 | 1128 | 1352 | 1800 | 2280 |
| 13 | 224 | 488 | 744 | 1032 | 1256 | 1544 | 2024 | 2536 |
| 14 | 256 | 552 | 840 | 1128 | 1416 | 1736 | 2280 | |
| 15 | 280 | 600 | 904 | 1224 | 1544 | 1800 | 2472 | |
| 16 | 328 | 632 | 968 | 1288 | 1608 | 1928 | 2536 | |
| 17 | 336 | 696 | 1064 | 1416 | 1800 | 2152 | | |
| 18 | 376 | 776 | 1160 | 1544 | 1992 | 2344 | | |
| 19 | 408 | 840 | 1288 | 1736 | 2152 | 2536 | | |
| 20 | 440 | 904 | 1384 | 1864 | 2344 | | | |
| 21 | 488 | 1000 | 1480 | 1992 | 2536 | | | |

As shown in Table 1.2, a TBS index ($I_{TBS}$) is determined based on an MCS index ($I_{MCS}$) indicated by the MCS field in the DCI format N0, and then a transmission time point $I_{RU}$ is determined with reference to the resource allocation field in the DCI format N0, to determine the TBS.

MCS indexes of QPSK correspond to the TBS indexes 0 to 13 in the TBS table. A new modulation scheme, for example, 16QAM, corresponds to the TBS indexes 14 to 21 in the TBS table.

For downlink transmission in NB-IoT, a specific TBS table is as follows:

**Table 1.3**

| $I_{TBS}$ | $I_{RU}$ | | | | | | | |
|---|---|---|---|---|---|---|---|---|
| | 0 | 1 | 2 | 3 | 4 | 5 | 6 | 7 |
| 0 | 16 | 32 | 56 | 88 | 120 | 152 | 208 | 256 |
| 1 | 24 | 56 | 88 | 144 | 176 | 208 | 256 | 344 |
| 2 | 32 | 72 | 144 | 176 | 208 | 256 | 328 | 424 |
| 3 | 40 | 104 | 176 | 208 | 256 | 328 | 440 | 568 |
| 4 | 56 | 120 | 208 | 256 | 328 | 408 | 552 | 680 |

(continued)

| $I_{TBS}$ | $I_{RU}$ | | | | | | | |
|---|---|---|---|---|---|---|---|---|
| | 0 | 1 | 2 | 3 | 4 | 5 | 6 | 7 |
| 5 | 72 | 144 | 224 | 328 | 424 | 504 | 680 | 872 |
| 6 | 88 | 176 | 256 | 392 | 504 | 600 | 808 | 1000 |
| 7 | 104 | 224 | 328 | 472 | 584 | 712 | 1000 | 1224 |
| 8 | 120 | 256 | 392 | 536 | 680 | 808 | 1096 | 1384 |
| 9 | 136 | 296 | 456 | 616 | 776 | 936 | 1256 | 1544 |
| 10 | 144 | 328 | 504 | 680 | 872 | 1000 | 1384 | 1736 |
| 11 | 176 | 376 | 584 | 776 | 1000 | 1192 | 1608 | 2024 |
| 12 | 208 | 440 | 680 | 1000 | 1128 | 1352 | 1800 | 2280 |
| 13 | 224 | 488 | 744 | 1032 | 1256 | 1544 | 2024 | 2536 |
| 14 | 256 | 552 | 840 | 1128 | 1416 | 1736 | 2280 | 2856 |
| 15 | 280 | 600 | 904 | 1224 | 1544 | 1800 | 2472 | 3112 |
| 16 | 328 | 632 | 968 | 1288 | 1608 | 1928 | 2600 | 3240 |
| 17 | 336 | 696 | 1064 | 1416 | 1800 | 2152 | 2856 | 3624 |
| 18 | 376 | 776 | 1160 | 1544 | 1992 | 2344 | 3112 | 4008 |
| 19 | 408 | 840 | 1288 | 1736 | 2152 | 2600 | 3496 | 4264 |
| 20 | 440 | 904 | 1384 | 1864 | 2344 | 2792 | 3752 | 4584 |
| 21 | 488 | 1000 | 1480 | 1992 | 2472 | 2984 | 4008 | 4968 |

There are two deployment modes during downlink transmission: Standalone or Guard-Band (Standalone or Guard-Band, SA/GB), and In-Band (In-Band, IB). In the SA/GB deployment mode, the MCS indexes of the QPSK correspond to the TBS indexes 0 to 13 in the TBS table, and MCS indexes of the 16QAM correspond to the TBS indexes 13 to 21 in the TBS table. In the IB mode, the MCS indexes of the QPSK correspond to the TBS indexes 0 to 10 in the TBS table, and MCS indexes of the 16QAM correspond to the TBS indexes 11 to 17 in the TBS table.

The MCS field in the DCI is 4 bits, and the DCI indicates only a second modulation scheme. In this case, when TBS indexes are 0 to 13, for an allocation status of the MCS field, refer to Table 1.4.

**Table 1.4**

| MCS field in the DCI | | |
|---|---|---|
| $I_{MCS}$ | Modulation order | $I_{TBS}$ |
| 0 | 2 | 0 |
| 1 | 2 | 1 |
| 2 | 2 | 2 |
| ... | 2 | ... |
| ... | 2 | ... |
| 13 | 2 | 13 |
| 14 | reserved | reserved |
| 15 | reserved | reserved |

As shown in Table 1.4, the 4-bit MCS field can indicate the MCS indexes 0 to 15 in total, where the indexes 0 to 13 indicate TBS indexes of the QPSK, and the remaining two MCS indexes 14 and 15 are reserved.

When TBS indexes of the second modulation scheme are 0 to 11, for an allocation status of the MCS field in

13

the DCI, refer to Table 1.5.

**Table 1.5**

| MCS field in the DCI | | |
|---|---|---|
| $I_{MCS}$ | Modulation order | $I_{TBS}$ |
| 0 | 2 | 0 |
| 1 | 2 | 1 |
| 2 | 2 | 2 |
| ... | 2 | ... |
| ... | 2 | ... |
| 10 | 2 | 10 |
| 11 | reserved | reserved |
| 12 | reserved | reserved |
| 13 | reserved | reserved |
| 14 | reserved | reserved |
| 15 | reserved | reserved |

The new modulation scheme is introduced in a data transmission process, to improve a data transmission rate and further support a higher-speed internet of things service. It is assumed that the new modulation scheme (a first modulation scheme) is the 16QAM. As shown in Table 1.4, the 4-bit MCS field can indicate the MCS indexes 0 to 15 in total, where the indexes 0 to 13 indicate the TBS indexes of the QPSK, and the remaining two MCS indexes 14 and 15 are reserved. Consequently, the TBS indexes 14 to 21 of the 16QAM cannot be fully indicated.

Alternatively, as shown in Table 1.5, the 4-bit MCS field can indicate the MCS indexes 0 to 15 in total, where the indexes 0 to 10 indicate the TBS indexes of the QPSK, and the remaining five MCS indexes 11 to 15 are reserved. Consequently, TBS indexes 11 to 17 of the 16QAM cannot be fully indicated.

A method that may be used in a possible case includes the following steps, to enable the DCI to support scheduling in the new modulation scheme:

(1) Introducing a new 1 bit into the DCI

The new 1 bit is introduced into the DCI to indicate that a modulation scheme is the 16QAM or the QPSK. For example, the bit value is "0", indicating that a modulation scheme is the QPSK. In this case, a bit value in the 4-bit MCS field represents a corresponding MCS index in a QPSK modulation scheme. The bit value is " 1", indicating that the modulation scheme is the 16QAM. In this case, a bit value in the 4-bit MCS field indicates that the bit value in the MCS field represents a corresponding MCS index in a 16QAM modulation scheme. For details, refer to Table 1.6.

**Table 1.6**

| Status of the MCS field | $I_{MCS}$ | Modulation order | $I_{TBS}$ |
|---|---|---|---|
| (0)0000 | 1 | 2 | 1 |
| (0)0001 | 2 | 2 | 2 |
| ... | ... | ... | ... |
| (0)1101 | 13 | 2 | 13 |
| (1)0000 | 14 | 4 | 14 |
| (1)0001 | 15 | 4 | 15 |
| ... | ... | ... | ... |
| (1)0111 | 21 | 4 | 21 |

As shown in Table 1.6, states "0000"(0)-"0111"(7) ("-" means "to", that is, a plurality of consecutive values, including an endpoint value) in the MCS field indicate the TBS indexes 14 to 21 of the 16QAM, and corresponding MCS indexes are 14 to 21. In this case, a dedicated 1 bit in the MCS field indicates the 16QAM or the QPSK. For example, as shown in Table 1.6, "0" indicates the QPSK, and "1" indicates the 16QAM.

Similarly, when the TBS indexes of the 16QAM are 11 to 17, states "10000"(0)-"10110"(6) ("-" means "to", that is, a plurality of consecutive values, including an endpoint value) in the MCS field indicate that corresponding MCS indexes are 11 to 17.

Alternatively, the new 1 bit may be "0", indicating that another bit value in the MCS field represents a corresponding MCS index in the 16QAM modulation scheme. The new 1 bit may be "1", indicating that another bit value in the MCS field represents a corresponding MCS index in the QPSK modulation scheme. This is not limited in embodiments of this application.

(2) Adding 1 bit to the MCS field

The new 1 bit is introduced into the MCS field (one 1 bit is also added to the DCI), so that the MCS field includes 5 bits, and a total of 32 states can be indicated. In this case, a number of MCS indexes in the QPSK and a number of MCS indexes in the 16QAM can be indicated. For details, refer to Table 1.7.

**Table 1.7**

| Status of the MCS field | $I_{MCS}$ | Modulation order | $I_{TBS}$ |
|---|---|---|---|
| 00000 | 1 | 2 | 1 |
| 00001 | 2 | 2 | 2 |
| ... | ... | ... | ... |
| 01101 | 13 | 2 | 13 |
| 01110 | 14 | 4 | 14 |
| 01111 | 15 | 4 | 15 |
| 10000 | 16 | 4 | 16 |
| ... | ... | ... | ... |
| 10101 | 21 | 4 | 21 |

As shown in Table 1.7, when the TBS indexes of the 16QAM are 14 to 21, the indexes may be indicated by states "01110"(14)-"10101"(21) in the MCS field.

Similarly, when the TBS indexes of the 16QAM are 11 to 17, the indexes may be indicated by states "01011"(11)-"10001" (17) in the MCS field.

(3) Adjusting a mapping relationship between the MCS index and the TBS index

The MCS field remains a length of 4 bits, but the mapping relationship between the MCS index and the TBS index is adjusted. That is, when the TBS indexes of the 16QAM are 14 to 21, a sum of a number of TBS indexes of the QPSK and a number of TBS indexes of the 16QAM is 14+8=22, but these indexes correspond to only 16 states (16 MCS index values) in the MCS field. Then, a possible case includes that one MCS index state corresponds to a plurality of TBS index values, or one MCS index state corresponds to one TBS index value, but some TBS indexes do not correspond to MCS indexes. For details, refer to Table 1.8.

**Table 1.8**

| Status of the MCS field | $I_{MCS}$ | Modulation order | $I_{TBS}$ |
|---|---|---|---|
| 0000 | 0 | 2 | 0 |
| 0001 | 1 | 2 | 2 |
| ... | ... | ... | ... |
| 1111 | 15 | 4 | 21 |

As shown in Table 1.8, when a state in the MCS field is "0001" and an MCS index value is 1, a correspondingly mapped TBS index is 2. That is, even values are used for TBS indexes in an interval to achieve compression effect.

Similarly, when the TBS indexes of the 16QAM are 11 to 17, a number of TBS indexes of the QPSK and a number of TBS indexes of the 16QAM is 10+7=17, but these indexes correspond to 16 states (16 MCS index values) in the MCS field. Then, a possible case includes that one MCS index state corresponds to a plurality of TBS index values, or one MCS index state corresponds to one TBS index value.

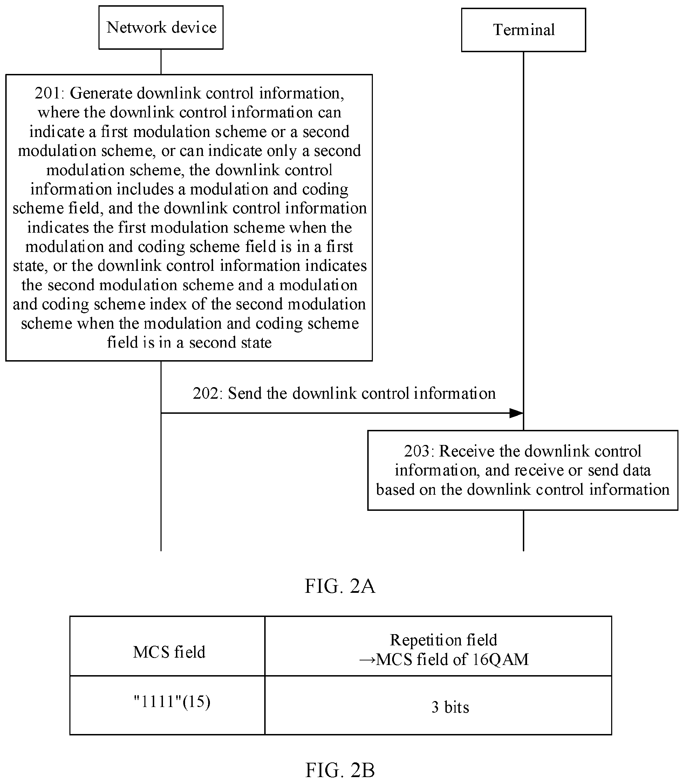

In the foregoing process, scheduling in the new modulation scheme can be indicated by the DCI. An embodiment of this application provides a data transmission method, to further optimize allocation of bit values in the DCI, ensure that all TBS indexes are fully indicated, and reduce overheads caused by increasing bit values in the DCI. As shown in FIG. 2A, the method includes the following steps:

201: A network device generates downlink control information DCI, where the DCI can indicate a first modulation scheme or a second modulation scheme, or can indicate only a second modulation scheme, the DCI includes a modulation and coding scheme MCS field, and the DCI indicates the first modulation scheme when the MCS field is in a first state, or the DCI indicates the second modulation scheme and an MCS index of the second modulation scheme when the MCS field is in a second state.

202: The network device sends the DCI.

203: A terminal receives the DCI, and receives or sends data based on the DCI.

The network device generates the DCI to perform uplink and downlink scheduling. It can be learned from the foregoing descriptions that the DCI format may be the format N0 or the format N1. In a possible case, the DCI can indicate only the second modulation scheme, and the second modulation scheme may be, for example, QPSK. As shown in Table 1.1, the DCI in the format N0 or the format N1 includes an MCS field, and a length of the MCS field is 4 bits. In addition, any state in "0000-1101" indicates a corresponding MCS index, and may indicate that MCS indexes corresponding to the QPSK are 0 to 13, and further indicate a TBS index of the QPSK. States "1110" and "1111" are not used.

It should be noted that, that the DCI can indicate only the second modulation scheme means that, compared with the two modulation schemes, the DCI can indicate only the second modulation scheme, and the DCI further indicates other information.

The DCI needs to support scheduling in a new modulation scheme, to meet a new communication requirement. The new modulation scheme may be, for example, 16QAM, 64QAM, or the like. The 16QAM is used as an example for description. There are eight TBS indexes corresponding to the 16QAM, and corresponding TBS index values are 14 to 21. However, based on an original DCI format, there are two remaining unused states in the MCS field indicating the TBS index. Some fields in the DCI may be reinterpreted to indicate an MCS index of the new modulation scheme, and further indicate a TBS index of the new modulation scheme, so that the DCI can indicate a new TBS index by using an existing bit length.

In this embodiment of this application, the first state of the MCS indicates the first modulation scheme. The first modulation scheme is the new modulation scheme, and the new modulation scheme may be a modulation scheme, for example, the 16QAM, whose modulation order is greater than or equal to 4. The second state of the MCS correspondingly indicates the MCS index of the second modulation scheme. The second modulation scheme is lower-order modulation originally supported by the DCI, and the lower-order modulation may be a modulation scheme, for example, the QPSK, whose modulation order is less than 4.

For details about Standalone or Guard-Band deployment modes, refer to Table 2.1.

**Table 2.1**

| MCS field in the DCI | | | |
|---|---|---|---|
| Status of the MCS field | $I_{MCS}$ | Modulation order | $I_{TBS}$ |
| 0000 | 0 | 2 | 0 |
| 0001 | 1 | 2 | 1 |
| 0010 | 2 | 2 | 2 |
| ... | ... | 2 | ... |
| 1101 | 13 | 2 | 13 |
| 1110 | - | reserved | reserved |
| 1111 | - | 4 (16QAM) | - |

It can be learned from Table 2.1 that the first state is "1111", the first modulation scheme is the 16QAM, the second state is any one of "0000" to "1101", and the second modulation scheme is the QPSK.

For details about an in-band deployment mode, refer to Table 2.2.

**Table 2.2**

| MCS field in the DCI | | | |
|---|---|---|---|
| Status of the MCS field | $I_{MCS}$ | Modulation order | $I_{TBS}$ |
| 0000 | 0 | 2 | 0 |
| 0001 | 1 | 2 | 1 |
| 0010 | 2 | 2 | 2 |
| ... | ... | 2 | ... |
| 1000 | 10 | 2 | 10 |
| 1001 | - | - | - |
| 1101 | - | - | - |
| 1110 | - | - | - |
| 1111 | - | 4 (16QAM) | - |

It can be learned from Table 2.2 that the first state is "1111", the first modulation scheme is the 16QAM, the second state is any one of "0000" to "1000", and the second modulation scheme is the QPSK. Optionally, because states "1001" to "1110" of the MCS do not indicate other content, any one of these states may also be used as the first state to indicate the first modulation scheme.

It can be learned that, in embodiments of this application, an MCS field of the first modulation scheme and an MCS field of the second modulation scheme are indicated by using different states in the MCS field, to support the new modulation scheme without increasing DCI overheads.

Optionally, the method further includes: When the DCI can indicate only the second modulation scheme, the DCI further includes a repetition field, where the repetition field is N bits, N is a positive integer, when the DCI can indicate the first modulation scheme or the second modulation scheme, the DCI further includes a field indicating an MCS index of the first modulation scheme, the field indicating the MCS index of the first modulation scheme is K bits, and K is a positive integer and K is less than or equal to N; the DCI further includes a repetition field and the repetition field is less than or equal to N-K bits; or the DCI does not include a repetition field.

When the MCS field indicates the first modulation scheme by using the first state, the MCS index of the first modulation scheme also needs to be indicated. Optionally, K bits may be extracted from bits of the DCI as the field indicating the MCS index of the first modulation scheme. This field may be referred to as the MCS field of the first modulation scheme. For example, the first modulation scheme is the 16QAM. It is assumed that K=3. States "000"(0)-"111"(7) in the MCS field of the first modulation scheme may indicate TBS indexes 14 to 21 of the 16QAM, or TBS indexes 11 to 17 of the 16QAM.

Because the K bits are extracted from the bits of the DCI to form the MCS field that specifically indicates the first modulation scheme, another field in the DCI has K bits missing. Optionally, when the DCI can indicate only the second modulation scheme, N bits in the repetition (repetition) field may be changed to N-K bits. For example, when the DCI can indicate only the QPSK (the second modulation scheme), a corresponding length of the repetition field is 3 bits when the DCI performs uplink scheduling, and a corresponding length of the repetition field is 4 bits when the DCI performs downlink scheduling. After the DCI indicates the first modulation scheme or the second modulation scheme, the MCS field of the first modulation scheme may be K=3 bits. In this case, for uplink scheduling, the repetition field is N-K=3-3=0 bits, and the DCI does not include the repetition field. For downlink scheduling, the repetition field is N-K=4-3=1 bit, and the repetition field may also be 1 bit. Alternatively, the remaining 1 bit is a reserved bit. In other words, the DCI does not include the repetition field. For downlink scheduling, it is assumed that K=4. The repetition field is N-K=4-4=0 bits. In other words, the DCI does not include the repetition field. In addition, a bit location of the MCS field of the first modulation scheme may be the same as or different from that of an original repetition field. FIG. 2B is a schematic diagram of a structure of DCI according to an embodiment of this application. As shown in FIG. 2B, when a state in the MCS field is "1111", the DCI indicates the 16QAM, and the original repetition field in the DCI is converted into an MCS field of the 16QAM.

For a specific manner in which the MCS field of the 16QAM indicates a TBS index in the modulation scheme, refer to the following table.

**Table 2.3**

| Status of the MCS field | MCS field of the 16QAM (the original repetition field) | MCS index | Modulation order | $I_{TBS}$ |
|---|---|---|---|---|
| 1111 | 000 | 14 | 4 | 14 |
| | 001 | 15 | 4 | 15 |
| | ... | ... | ... | ... |
| | 111 | 21 | 4 | 21 |

**Table 2.4**

| Status of the MCS field | MCS field of the 16QAM (the original repetition field) | MCS index | Modulation order | $I_{TBS}$ |
|---|---|---|---|---|
| 1111 | 000 | 11 | 4 | 11 |
| | 001 | 12 | 4 | 11 |
| | ... | ... | ... | ... |
| | 110 | 17 | 4 | 17 |

As shown in Table 2.3 or Table 2.4, when a state in the MCS field is "1111", the state of the MCS field indicates the first modulation scheme. In this case, the MCS index needs to be determined based on a state of a field indicating the MCS index of the first modulation scheme in the DCI, to further determine a TBS index of the first modulation scheme. Table 2.3 shows an indication manner used when the TBS indexes of the 16QAM are 14 to 21, and Table 2.4 shows an indication manner used when the TBS indexes of the 16QAM are 11 to 17.

It can be learned that, in this embodiment of this application, for a terminal supporting an NB-IoT capability of the first modulation scheme (the new modulation scheme), when the DCI can indicate only the second modulation scheme, a bit indicating the repetition field in the DCI becomes less or even disappears. In this way, the DCI includes a bit indicating the MCS field of the first modulation scheme, so that the DCI can support scheduling in both the first modulation scheme and the second modulation scheme. This process avoids increasing DCI overheads, and ensures DCI transmission efficiency.

It should be noted that, as shown in Table 2.1 and Table 2.2, because the state " 1110" of the MCS field is also a reserved state, the state "1110" may also be used as the first state to indicate the first modulation scheme. In this case, a method for indicating the MCS index of the first modulation scheme is the same as that described above. Details are not described herein again.

Optionally, the DCI generated by the network device is control information scrambled by using pre-configured uplink resource-radio network temporary identity (Pre-configured Uplink Resource-Radio Network Temporary Identity, PUR-RNTI). For example, DCI format N0 scrambled by using the PUR-RNTI is used to describe division of a corresponding bit field, as shown in Table 2.5.

**Table 2.5**

| Content included in DCI that is scrambled by using the PUR-RNTI and whose MCS is 14 | Number of included bits |
|---|---|
| Flag for format NO/format N1 differentiation field | 1 |
| MCS field | "1110" |
| ACK or fallback indication field | 1 |
| NPUSCH repetition adjustment field | 3 |
| TA advance adjustment field | 6 (if an ACK or fallback indication field is 0) |
| Reserved | All 1's |

As shown in Table 2.5, when the DCI is scrambled by using the PUR-RNTI, the MCS is 14, and a corresponding state in the MCS field is "1110", the DCI includes the following content:

The flag for format NO/format N1 differentiation field indicates that the DCI format is N0 or N1.

A corresponding state in the MCS field is "1110".

An acknowledgment feedback (Acknowledge Character, ACK) or fallback (Fall Back) indication field indicates whether current PUR transmission is successful, or whether next transmission falls back to another transmission mode. A specific indication manner may be 0-ACK, or 1-Fallback. When the field indicates 0, the current PUR transmission is successful, and when the field indicates 1, transmission falls back to the another transmission mode.

The NPUSCH repetition adjustment field indicates a number of times that a physical uplink shared channel can be retransmitted.

The timing advance adjustment (Timing Advance Adjustment, TA advance) field indicates timing advance adjustment.

A reserved (Reserved) bit is a bit not used currently in the DCI. Bit values of corresponding fields are all 1.

Similarly, the DCI scrambled by using the PUR-RNTI also needs to support data scheduling in the new modulation scheme. The DCI scrambled by using the PUR-RNTI may indicate that next data transmission mode uses the new modulation scheme. For the DCI scrambled by using the PUR-RNTI, the state " 1110" in the MCS field corresponds to an indication of the ACK or fallback indication field, to determine a next data transmission mode, that is, the MCS field is a fixed value and a value of a determined meaning, and does not indicate the first modulation scheme.

In this embodiment of this application, a first state "1111" in the MCS field may indicate the first modulation scheme (in this case, the first state does not include " 1110").

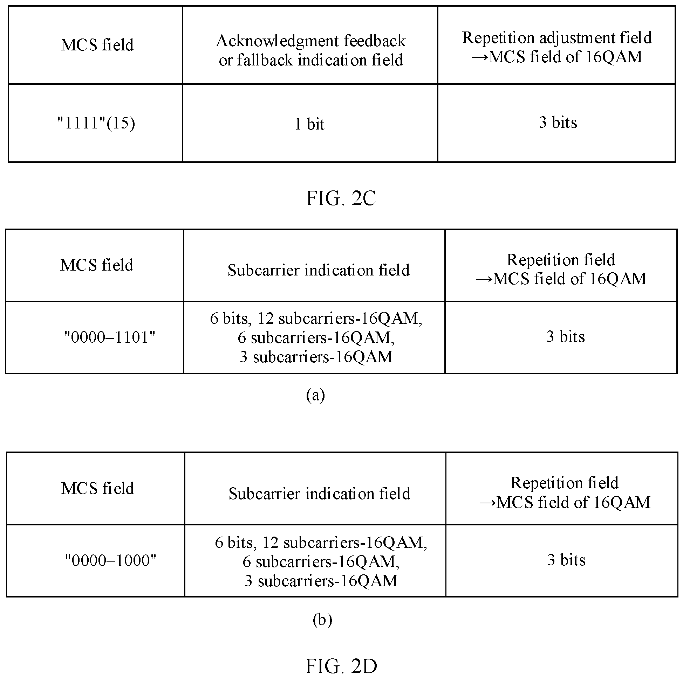

When the first state indicates the first modulation scheme, refer to FIG. 2C. FIG. 2C is a schematic diagram of another structure of DCI according to an embodiment of this application. As shown in FIG. 2C, when the state in the MCS field is "1111", the DCI indicates the 16QAM. In addition, the DCI scrambled by using the PUR-RNTI further includes a 1-bit acknowledgment feedback or fallback indication field indicating the next data transmission mode.

In addition, the MCS index of the first modulation scheme further needs to be indicated. Similarly, for example, the first modulation scheme is the 16QAM. The TBS indexes 14 to 21 of the 16QAM require at least eight MCS index indications, or the TBS indexes 11 to 17 of the 16QAM require at least seven MCS index indications. In general, 3 bits may be extracted from existing bits of the DCI to form an MCS field indicating the 16QAM. When the DCI scrambled by using the PUR-RNTI can indicate only the MCS index of the second modulation scheme, the DCI includes a 3-bit repetition adjustment (repetition adjustment) field. Optionally, when the DCI scrambled by using the PUR-RNTI indicates the first modulation scheme or the second modulation scheme, the DCI scrambled by using the PUR-RNTI does not include the repetition adjustment field, and the field indicating the MCS index of the first modulation scheme, namely, an indication field of the MCS index of the first modulation scheme, is obtained through division. Specifically, as shown in FIG. 2C, an original repetition adjustment field in the DCI is converted into the MCS field of the 16QAM. In other words, when the DCI can indicate only the second modulation scheme (for example, the QPSK), the 3-bit repetition adjustment field does not exist, and the MCS field of the 16QAM is further obtained through division. A bit location of the MCS field of the 16QAM may be the same as or different from that of the original repetition adjustment field.

A specific manner in which the MCS field of the 16QAM indicates a TBS index in the modulation scheme is similar to that in Table 2.3 and Table 2.4. Details are not described herein again.

Optionally, the reserved bit in the DCI scrambled by using the PUR-RNTI may be divided as the MCS field of the 16QAM. The reserved bit is an unused field and may indicate any new parameter. It can be learned that, in this embodiment of this application, when the DCI scrambled by using the PUR-RNTI can indicate only the second modulation scheme, a bit indicating the repetition adjustment field in the DCI becomes less or even disappears, and a field indicating the MCS index of the first modulation scheme is obtained by dividing the DCI, so that the DCI can support scheduling in both the first modulation scheme and the second modulation scheme. This process avoids increasing DCI overheads, and ensures DCI transmission efficiency.

Alternatively, when the MCS field is in another state (the second state) other than " 1111" and "1110", the first modulation scheme may also be indicated. The second state is a state, indicating the second modulation scheme, of the MCS index. When the TBS indexes are 0 to 13, the second state is any one of "0000" to "1101". When the TBS indexes are 0 to 17, the second state is any one of "0000" to "1000". The DCI further includes a subcarrier indication field including 6 bits in total, and can indicate 64 states. Because the 64 states cannot be completely used in existing subcarrier allocation, the first modulation scheme may be indicated by using a redundancy state in the subcarrier indication field.

Specifically, NB-IoT supports subcarrier spacings of 3.75 kHz (megahertz) and 15 kHz. For 3.75 kHz and 180 kHz, there are 48 subcarriers in total. For 15 kHz and 180 kHz, there are 12 subcarriers in total. 15 kHz supports scheduling of one subcarrier, three subcarriers, six subcarriers, and 12 subcarriers. A correspondence between a subcarrier index ($I_{sc}$) indicated by a subcarrier indication field in a DCI format N0 and an allocated subcarrier ($n_{sc}$) is shown in Table 3.1:

**Table 3.1**

| Subcarrier indication field $(I_{sc})$ | Allocated subcarrier $(n_{sc})$ |
|---|---|
| 0-11 | $I_{sc}$ |
| 12-15 | $3(I_{sc} - 12) + \{0,1,2\}$ |
| 16-17 | $6(I_{sc} - 16) + \{0,1,2,3,4,5\}$ |
| 18 | $\{0,1,2,3,4,5,6,7,8,9,10,11\}$ |
| 19-63 | Reserved |

As shown in the table, a total of 19 states are required.

The terminal may know a configuration of the subcarrier spacing in another message. When the subcarrier spacing is configured to be 3.75 kHz in the another message, the terminal interprets the subcarrier indication field in the DCI format N0 according to $n_{sc} = I_{sc}$. When the subcarrier spacing is configured to be 15 kHz in the another message, the terminal interprets the subcarrier indication field in the DCI format N0 based on the relationship in Table 3.1. So, at 3.75 kHz (in terms of a subcarrier spacing using more subcarrier indication field states), the subcarrier indication field in the DCI format N0 has 16 (64-48) redundancy states.

It is assumed that the DCI (which may be specifically the DCI format N0) indicates that the first modulation scheme is a modulation scheme of the 16QAM, the correspondence between the subcarrier index $(I_{sc})$ indicated by the subcarrier indication field and the allocated subcarrier $(n_{sc})$ is shown in Table 3.2:

**Table 3.2**

| Subcarrier indication field $(I_{sc})$ | Allocated subcarrier $(n_{sc})$ |
|---|---|
| 48-51 | $3(I_{sc} - 48) + \{0,1,2\}$-16QAM |
| 52-53 | $6(I_{sc} - 52) + \{0,1,2,3,4,5\}$-16QAM |
| 54 | $\{0,1,2,3,4,5,6,7,8,9,10,11\}$-16QAM |
| 55-63 | Reserved |

As shown in Table 3.2, a total of seven states 48 to 54 are used in the subcarrier indication field, to indicate a subcarrier corresponding to the 16QAM. In this case, remaining states in the subcarrier indication field are 55 to 63, namely, nine states in total. Some of the nine states may indicate that the allocated subcarrier corresponds to a modulation scheme of the 16QAM.

Specifically, refer to FIG 2D. FIG. 2D is a schematic diagram of another structure of DCI according to an embodiment of this application. As shown in (a) in FIG. 2D, when the second state is any one of "0000"-"1101", the 16QAM may be indicated by a redundancy state in the subcarrier indication field, including 16QAM respectively corresponding to scheduling of 3 subcarriers, 6 subcarriers, and 12 subcarriers.

Alternatively, as shown in (b) in FIG. 2D, when the second state is any one of "0000" to "1000", the 16QAM may be indicated by a redundancy state in the subcarrier indication field, including 16QAM respectively corresponding to scheduling of 3 subcarriers, 6 subcarriers, and 12 subcarriers.

In addition to the first modulation scheme, the MCS index of the first modulation scheme also needs to be indicated. Optionally, as described in the foregoing embodiment, when the DCI indicates only the second modulation scheme, the bit indicating the repetition field may be reduced, or even disappear, so that the DCI includes the bit indicating the MCS field of the first modulation scheme.

It may be predicted that, when the first modulation scheme is indicated by using the subcarrier indication field, the MCS index of the first modulation scheme is indicated by using another field, and the MCS index of the second modulation scheme is indicated by the DCI by using the second state, the DCI can indicate two different modulation schemes. This may indicate that DCI scheduling can be switched between the two different modulation schemes.

In this embodiment of this application, on a premise that the DCI keeps indicating the MCS index of the second modulation scheme, the first modulation scheme (the new modulation scheme) is indicated by using the redundancy state in the subcarrier indication field, to avoid increasing the DCI overheads, and implement simultaneous indication of two different modulation schemes. In this way, during switching of a modulation scheme for data scheduled by the DCI, the network device does not need to re-deliver the DCI. This improves data scheduling efficiency by the DCI. After generating the DCI, the network device sends the DCI to the terminal. After receiving the DCI, the terminal sends or receives the data based on the DCI. Specifically, after receiving the DCI, the terminal demodulates the DCI to obtain a modulation scheme indicated by the DCI, determines an MCS index corresponding to the modulation scheme, further determines a TBS index, and then transmits data based on the modulation scheme indicated by the TBS index and a transport block. For example, if the DCI indicates the 16QAM and an MCS index corresponding to the 16QAM, the terminal transmits, by using the 16QAM, the data on a transport block corresponding to the TBS index indicated by the MCS index, including receiving or sending the data.

In a downlink standalone or guard-band deployment mode, if the data is transmitted on a narrowband physical downlink shared channel (NPDSCH) by using the 16QAM, a first power ratio is a ratio of an NPDSCH power per resource element to an NRS power per resource element on a time-domain symbol that includes a narrowband reference signal (NRS), and a second power ratio is a ratio of NPDSCH energy per resource element (EPRE) to an NRS power per resource element on a time-domain symbol that does not include a narrowband reference signal (NRS). For UE on which 16QAM modulation is performed, a network constraint or a network indicates, based on first message, whether powers of resource elements of the NPDSCH are the same. If the powers are the same, the network indicates the first power ratio or a second power ratio to the UE. If the powers are different, the network indicates a first power ratio and a second power ratio to the UE. The UE receives the first message, and demodulates the NPDSCH based on the first message.

In a downlink in-band mode, if the data is transmitted on a narrowband physical downlink shared channel (NPDSCH) by using the 16QAM, a first power ratio is a ratio of an NPDSCH power per resource element to an NRS power per resource element on a time-domain symbol that includes a narrowband reference signal (NRS), a second power ratio is a ratio of NPDSCH energy per resource element (EPRE) to an NRS power per resource element on a time-domain symbol that does not include a narrowband reference signal (NRS) and a cell-specific reference signal (CRS), and a third power ratio is a ratio of NPDSCH energy per resource element (EPRE) to an NRS power per resource element on a time-domain symbol that includes a cell-specific reference signal (CRS). For UE on which 16QAM modulation is performed, a network constraint or a network indicates whether powers of resource elements of the NPDSCH are the same or partially the same. If all of the powers are the same, the network indicates a first power ratio, a second power ratio, or the third power ratio to the UE. If an NPDSCH power per resource unit on a time-domain symbol that includes only the narrowband reference signal (NRS) is the same as NPDSCH energy per resource element (EPRE) on a time-domain symbol that does not include the narrowband reference signal (NRS) and the cell-specific reference signal (CRS), the network indicates the first power ratio or the second power ratio and the third power ratio to the UE. If all of the powers are different, the network indicates the first power ratio, the second power ratio, and the third power ratio to the UE. The UE receives the first message, and demodulates the NPDSCH based on the first message. The UE receives the first message, and demodulates the NPDSCH based on the first message.

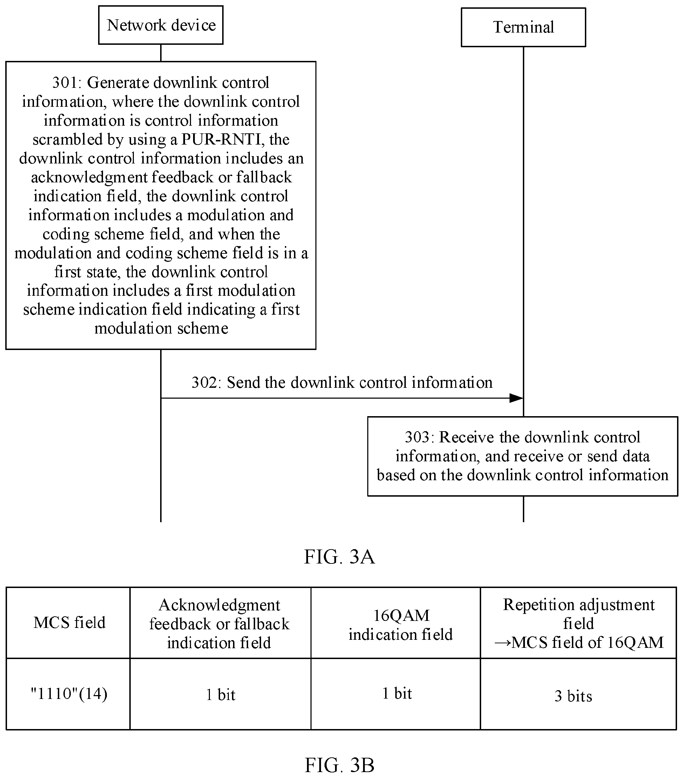

Alternatively, an embodiment of this application further provides another data transmission method. As shown in FIG. 3A, the method includes the following steps:

301: A network device generates downlink control information DCI, where the DCI is control information scrambled by using a PUR-RNTI, the DCI includes an acknowledgment feedback or fallback indication field, the DCI includes a modulation and coding scheme MCS field, and when the MCS field is in a first state, the DCI includes a first modulation scheme indication field indicating a first modulation scheme.

302: The network device sends the DCI.

303: A terminal receives the DCI, and receives or sends data based on the DCI.

Same as the descriptions in the foregoing embodiment, the first modulation scheme is a new modulation scheme, for example, 16QAM or 64QAM, and a second modulation scheme is a lower-order modulation scheme, for example, QPSK. In this embodiment of this application, the DCI generated by the network device is the control information scrambled by using the PUR-RNTI. According to Table 2.5 in the foregoing embodiment, when a state in the MCS field is "1110", a structure of the DCI scrambled by using the PUR-RNTI may be obtained.

When a state in the MCS field is "1110" (the first state), the first modulation scheme may also be indicated. Specifically, refer to FIG. 3B. FIG. 3B is a schematic diagram of another structure of DCI according to an embodiment of this application. As shown in FIG. 3B, the state in the MCS field is "1110", and the DCI includes a 1-bit acknowledgment feedback or fallback indication field. In this case, 1 bit is extracted from the original DCI scrambled by using the PUR-RNTI as a reserved bit, to specifically indicate the first modulation scheme, and may be referred to as the first modulation scheme indication field. In FIG. 3B, if the first modulation scheme is the 16QAM, the bit field may be referred to as a 16QAM indication field. In a possible case, a value of the 16QAM indication field is "0", indicating that a modulation scheme is the 16QAM. Alternatively, the bit field may further indicate the second modulation scheme. For example, a value of the 16QAM indication field is "1", indicating that a modulation scheme is the second modulation scheme (for example, the QPSK).

Similarly, an MCS index of the first modulation scheme needs to be indicated. Similar to the embodiments described in FIG. 2A to FIG. 2C, when the DCI scrambled by using the PUR-RNTI indicates only an MCS index of the second modulation scheme, the DCI includes a 3-bit repetition adjustment (repetition adjustment) field. When the DCI scrambled by using the PUR-RNTI indicates the first modulation scheme or the second modulation scheme, the DCI scrambled by using the PUR-RNTI does not include a repetition adjustment field, but is divided into an MCS index indication field of the first modulation scheme. Specifically, as shown in FIG. 3B, an original repetition adjustment field in the DCI is converted into an MCS field of the 16QAM. A bit location of the MCS field of the 16QAM may be the same as or different from that of the original repetition adjustment field.

Optionally, 1 bit of a reserved bit in the DCI scrambled by using the PUR-RNTI may also be divided as an MCS field of the first modulation scheme. The reserved bit is an unused field and may indicate any new parameter.

It can be learned that, in this embodiment of this application, for the DCI scrambled by using the PUR-RNTI, the reserved bit in the DCI may be used to support scheduling in the new modulation scheme without increasing downlink control information overheads. This avoids increasing the DCI overheads.

After generating the DCI, the network device sends the DCI to the terminal. After receiving the DCI, the terminal sends or receives the data based on the DCI. Specifically, after receiving the DCI, the terminal demodulates the DCI to obtain a modulation scheme indicated by the DCI, determines an MCS index corresponding to the modulation scheme, further determines a TBS index, and then transmits data based on the modulation scheme indicated by the TBS index and a transport block. In addition, the DCI scrambled by using the PUR-RNTI further indicates, by using the acknowledgment feedback or fallback indication field, whether current PUR transmission is successful, or whether next transmission falls back to another transmission mode.

Therefore, after the terminal receives the DCI, if the DCI indicates whether a modulation scheme for next data transmission including PUR transmission or other data transmission is the 16QAM and an MCS index of the 16QAM, the terminal transmits, by using the 16QAM, the data on a transport block indicated by a TBS index corresponding to the MCS index.

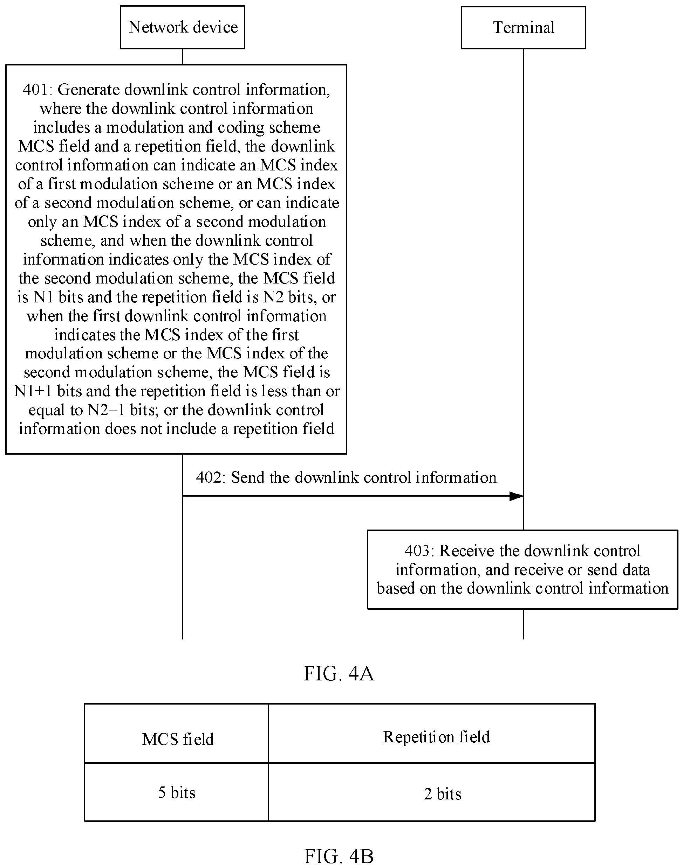

In a possible case, refer to FIG. 4A. FIG. 4A is a flowchart of another data transmission method according to an embodiment of this application. As shown in FIG. 4A, the method includes the following steps:

401: A network device generates downlink control information DCI, where the DCI can indicate an MCS index of a first modulation scheme or an MCS index of a second modulation scheme, or can indicate only an MCS index of a second modulation scheme, the DCI includes a modulation and coding scheme MCS field and a repetition field, and when the DCI can indicate only the MCS index of the second modulation scheme, the MCS field is N1 bits and the repetition field is N2 bits, or when the DCI indicates the MCS index of the first modulation scheme or the MCS index of the second modulation scheme, the MCS field is N1+1 bits and the repetition field is less than or equal to N2-1 bits; or the DCI does not include the repetition field.

402: The network device sends the DCI.

403: The terminal receives the DCI, and sends or receives data based on the DCI.

Same as the descriptions in the foregoing embodiment, the first modulation scheme is a new modulation scheme, for example, 16QAM or 64QAM, and the second modulation scheme is a lower-order modulation scheme, for example, QPSK.

When the DCI can indicate only the MCS index of the second modulation scheme, downlink DCI content corresponding to the DCI is shown in Table 1.1. The second modulation scheme may be the QPSK, and a 4-bit MCS field indicates a QPSK MCS index, to implement indication of uplink TBS indexes 0 to 13. For downlink scheduling, in a GB/SA deployment mode, TBS indexes are 0 to 13; and in an IB deployment mode, TBS indexes are 0 to 10. The TBS index is also indicated by corresponding 4 bits in the MCS field.

It should be noted that, that the DCI can indicate only the MCS index of the second modulation scheme means that the DCI can indicate only the MCS index of one of the two modulation schemes, and the DCI further indicates other information.

In this embodiment of this application, the DCI further needs to indicate the MCS index of the first modulation scheme in addition to an MCS field of the QPSK, to further indicate a TBS index of the first modulation scheme. When the first modulation scheme is the 16QAM, corresponding TBS indexes are 14 to 21 or 11 to 17. In the former case, at least 8 MCS states are required for indication, and 14 MCS states of the QPSK are considered, so that there are 22 MCS states in total. In the latter case, at least 7 MCS states are required for indication, and 11 MCS states of the QPSK are considered, so that there are 18 MCS states in total. However, the 4-bit MCS field cannot meet this requirement.

In view of this, in this embodiment of this application, it is proposed that 1 bit is added to the MCS field. In other words, it is assumed that when the DCI can indicate only the second modulation scheme, a length of the MCS field is N1 bits, and indicates the MCS index of the second modulation scheme. In this case, when the DCI indicates both the first modulation scheme and the second modulation scheme, a length of the MCS field is N1+1 bits, and indicates the MCS index of the first modulation scheme or the second modulation scheme. For example, it is assumed that, when the DCI can support scheduling in only the second modulation scheme, as shown in Table 1.1, N1=4. In this embodiment of this application, when the DCI supports scheduling in both the first modulation scheme and the second modulation scheme, the length of the MCS field is 5 bits. In this way, the MCS field can indicate 25=32 MCS states, which can meet a requirement for indicating MCS indexes of the 16QAM and the QPSK. For details, refer to FIG. 4B. FIG. 4B is a schematic diagram of a structure of DCI according to an embodiment of this application. As shown in FIG. 4B, in the DCI, the MCS field is 5 bits and the repetition field is 2 bits. The MCS field indicates the MCS indexes of the first modulation scheme and the second modulation scheme.

Because 1 bit is added to the MCS field, another field needs to be reduced by 1 bit without changing a total length of the DCI. In this embodiment of this application, a field from which 1 bit is reduced is the repetition field. In other words, it is assumed that a length of the repetition field is N2 bits when the DCI can support scheduling in only the second modulation scheme. In this case, when the DCI supports scheduling in both the first modulation scheme and the second modulation scheme, the length of the repetition field is N2-1 bits. Alternatively, a length of the repetition field may be less than N2-1 bits, or the DCI may no longer include the repetition field. For uplink transmission scheduled by the DCI, N2=3. For downlink transmission scheduled by DCI, N2=4. 1 bit added to the MCS field and 1 bit reduced from the repetition field may be a same bit or different bits. This is not limited herein.

For example, when the DCI supports scheduling in both the first modulation scheme and the second modulation scheme, the length of the MCS field is 5 bits, the first modulation scheme is the 16QAM, and the second modulation scheme is the QPSK. A manner in which a state in the MCS field indicates a TBS index is shown in Table 4.1.

**Table 4.1**

| Status of the MCS field | $I_{MCS}$ | Modulation order | $I_{TBS}$ |
|---|---|---|---|
| 00000 | 0 | 2 | 0 |
| 00001 | 1 | 2 | 1 |
| ... | ... | ... | ... |
| 01101 | 13 | 2 | 13 |
| 01110 | 14 | 4 | 14 |
| 01111 | 15 | 4 | 15 |
| ... | ... | ... | ... |
| 10111 | 21 | 4 | 21 |

As shown in the table, the MCS indexes corresponding to the QPSK are 0 to 13, and the MCS indexes corresponding to the 16QAM are 14 to 21. The MCS index and the TBS index are in a one-to-one correspondence and have a same value.

Alternatively, refer to Table 4.2.

**Table 4.2**

| MCS field | $I_{MCS}$ | Modulation order | $I_{TBS}$ |
|---|---|---|---|
| 00000 | 0 | 2 | 0 |
| 00001 | 1 | 2 | 1 |
| ... | ... | ... | ... |
| 01101 | 13 | 2 | 13 |
| 01110 | 14 | 4 | 13 |
| 01111 | 15 | 4 | 14 |
| ... | ... | ... | ... |

(continued)

| MCS field | $I_{MCS}$ | Modulation order | $I_{TBS}$ |
|---|---|---|---|
| 11000 | 22 | 4 | 21 |

As shown in the table, the MCS indexes corresponding to the QPSK are 0 to 13, and indicate TBS indexes 0 to 13 corresponding to the QPSK. However, the MCS indexes corresponding to the 16QAM are 14 to 22, because the TBS index 13 may be indicated by using the MCS index corresponding to the QPSK, or may be indicated by using the MCS index corresponding to the 16QAM. In other words, a transport block corresponding to the TBS index may be used for both QPSK scheduling and 16QAM scheduling.

Alternatively, refer to Table 4.3.

**Table 4.3**

| MCS field | $I_{MCS}$ | Modulation order | $I_{TBS}$ |
|---|---|---|---|
| 00000 | 0 | 2 | 0 |
| 00001 | 1 | 2 | 1 |
| ... | ... | ... | ... |
| 01100 | 12 | 2 | 12 |
| 01101 | 13 | 2 | 13 |
| 01110 | 14 | 4 | 12 |
| 01111 | 15 | 4 | 13 |
| 11000 | 16 | 4 | 14 |
| ... | ... | ... | ... |
| 11001 | 23 | 4 | 21 |

As shown in the table, the MCS indexes corresponding to the QPSK are 0 to 13, and indicate the TBS indexes 0 to 13 corresponding to the QPSK. However, the MCS indexes corresponding to the 16QAM are 14 to 23, because the TBS indexes 12 and 13 may be indicated by using the MCS index corresponding to the QPSK, or may be indicated by using the MCS index corresponding to the 16QAM. In other words, a transport block corresponding to these TBS indexes may be used for both QPSK scheduling and 16QAM scheduling.

In addition, a manner in which the state in the MCS field indicates the TBS index is shown in Table 4.4.

**Table 4.4**

| MCS field | $I_{MCS}$ | Modulation order | $I_{TBS}$ |
|---|---|---|---|
| 00000 | 0 | 2 | 0 |
| 00001 | 1 | 2 | 1 |
| ... | ... | ... | ... |
| 01010 | 10 | 2 | 10 |
| 01011 | 11 | 4 | 11 |
| 01100 | 12 | 4 | 15 |
| ... | ... | ... | ... |
| 10001 | 17 | 4 | 17 |

As shown in the table, the MCS indexes corresponding to the QPSK are 0 to 10, and the MCS indexes corresponding to the 16QAM are 11 to 17. The MCS index and the TBS index are in a one-to-one correspondence and have a same value.

Therefore, for DCI for scheduling uplink transmission, the repetition field is N2-1 bits, and N2=3. A manner of indicating the repetition field is shown in Table 4.5.

**Table 4.5**

| Repetition field | Repetition number |
|---|---|
| 0 | 1 |
| 1 | 2 |
| 2 | 4 |
| 3 | 8 |

For DCI for scheduling downlink transmission, the repetition field is N2-1 bits, and N2=4. A manner of indicating the repetition field is shown in Table 4.6.

**Table 4.6**

| Repetition field | Repetition number |
|---|---|
| 0 | 1 |
| 1 | 2 |
| 2 | 4 |
| 3 | 8 |
| 4 | 16 |
| 5 | 32 |
| 6 | 64 |
| 7 | 128 |

In addition, when the MCS field indicates the MCS index of the first modulation scheme or the MCS index of the second modulation scheme, because the first modulation scheme is the new modulation scheme, the network device may further indicate the first modulation scheme by using higher layer signaling. In this way, after receiving the DCI and obtaining the MCS index, the network device may determine a specific first modulation scheme based on the higher layer signaling, and further determine an MCS index of the modulation scheme.

It can be learned that, in this embodiment of this application, when a bit value included in the downlink control information remains unchanged, compared with a case in which the downlink control information indicates only the MCS index of the second modulation scheme, 1 bit is added to the MCS field and 1 bit is reduced from the repetition field when the downlink control information indicates the MCS index of the first modulation scheme or the MCS index of the second modulation scheme. In this way, there are sufficient states in the MCS field to support both the MCS index of the first modulation scheme and the MCS index of the second modulation scheme. This process avoids increasing DCI overheads, and ensures DCI transmission efficiency. After receiving the DCI sent by the network device, the terminal also demodulates the DCI to obtain a modulation scheme indicated by the DCI and an MCS index corresponding to the modulation scheme, and then transmits the data based on the modulation scheme and a transport block indicated by the DCI. For details, refer to descriptions of the embodiments corresponding to FIG. 2A to FIG. 2C. Details are not described herein again.

An IoT is sensitive to power consumption. Each time the terminal sends uplink data, the terminal needs to establish a radio resource control (Radio Resource Control, RRC) connection to the network device through a random access process. If the sent uplink data packet is small and not frequently sent, there is large power consumption of establishing the RRC connection during random access. This is unfavorable to energy saving of an IoT device. In this case, an early data transmission (Early Data Transmission, EDT) technology is used, that is, the terminal may send small-packet uplink data along with an RRC connection establishment request (a Msg 3) in the random access process. This eliminates a need to send a small packet only after the entire random access process is complete and an RRC connection is set up. How to support scheduling in the new modulation scheme in the random access process is an urgent problem to be resolved.

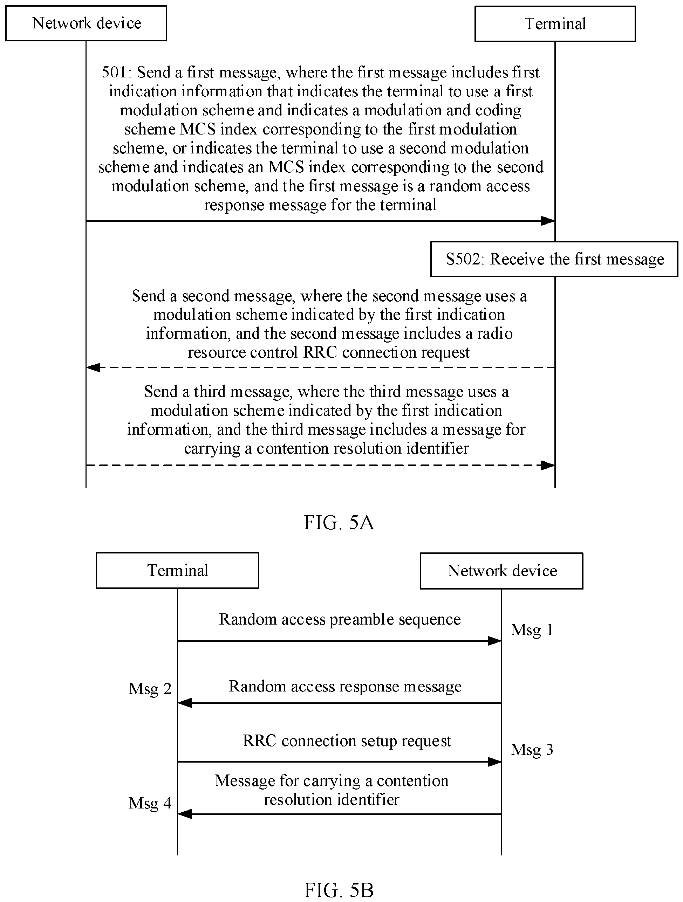

Refer to FIG. 5A. FIG. 5A is a flowchart of a data transmission method according to an embodiment of this application. As shown in FIG. 5A, the method includes the following steps:

501: A network device sends a first message, where the first message includes first indication information that indicates a terminal to use a first modulation scheme and indicates a modulation and coding scheme MCS index corresponding to the first modulation scheme, or indicates a terminal to use a second modulation scheme and indicates an MCS index corresponding to the second modulation scheme, and the first message is a random access response message for the terminal. A subcarrier spacing configured by a network device for the terminal is 15 kHz, and a subcarrier indication index is greater than 11.

502: The terminal receives the first message, and sends a second message to the network device, where the second message uses a modulation scheme indicated by the first indication information, and the second message includes a radio resource control RRC connection establishment request; and/or the terminal receives a third message sent by the network device, where the third message uses a modulation scheme indicated by the first indication information, and the third message includes a message for carrying a contention resolution identifier.

In this embodiment of this application, the first message sent by the network device is the random access response message for the terminal. In other words, the first message is a response message returned by the network device after the network device receives a random access request sent by the terminal. For a random access process, refer to FIG. 5B. As shown in FIG. 5B, in the random access process, the terminal first sends the random access request to the network device. The random access request may be specifically a random access preamble (preamble) sequence (which may be referred to as a Msg 1). After receiving the random access request sent by the terminal, the network device sends a response message for the random access request (Random Access Response, RAR, which may be referred to as a Msg 2) to the terminal. After receiving the random access response message, the terminal sends the RRC connection establishment request (which may be referred to as a Msg 3) to the network device. After receiving the RRC connection establishment request, the network device sends, to the terminal, the message for carrying the contention resolution identifier (which may be referred to as a Msg 4). When the subcarrier indication index is greater than 11, the first indication information in the first message indicates the first modulation scheme or the second modulation scheme and the MCS index corresponding to the modulation scheme. When the first message indicates only the second modulation scheme and the MCS index of the second modulation scheme, a specific indication manner is shown in Table 5.1. A redundancy state in the first indication information may indicate the first modulation scheme and the MCS index of the first modulation scheme. The first modulation scheme is 16QAM, and the second modulation scheme is QPSK.

Alternatively, a 1-bit modulation scheme indication field is added to the first message to indicate the first modulation scheme or the second modulation scheme. The first message does not include a repetition field or includes some bits in a repetition field, and 2 bits or 3 bits indicate an MCS index of the first modulation scheme.

Alternatively, if a 1-bit modulation scheme indication field indicates that a modulation scheme is 16QAM, "011-111" in the RAR indicate an MCS index corresponding to the 16QAM.

**Table 5.1**

| MCS index $I_{MCS}$ | Modulation scheme $\Delta f$ = 3.75 kHz or $\Delta f$ =15 kHz and $I_{sc}$ = 0,1,...,11 | Modulation scheme $\Delta f$ =15 kHz and $I_{sc}$ >11 | Number of RUs $N_{RU}$ | TBS |
|---|---|---|---|---|
| '000' | pi/2 BPSK | QPSK | 4 | 88 bits |
| '001' | pi/4 QPSK | QPSK | 3 | 88 bits |
| '010' | pi/4 QPSK | QPSK | 1 | 88 bits |
| '011' | reserved | reserved | reserved | reserved |
| '100' | reserved | reserved | reserved | reserved |
| '101' | reserved | reserved | reserved | reserved |
| '110' | reserved | reserved | reserved | reserved |
| '111' | reserved | reserved | reserved | reserved |

It can be learned from Table 5.1 that, $I_{sc}$ is an index of a subcarrier indication field, nsc is a scheduled subcarrier, $I_{sc}$=0-11 indicates that the scheduled subcarrier nsc is single-carrier scheduling of any one of subcarriers whose sequence numbers are 0 to 11; $I_{sc}$=12-15 indicates that the scheduled subcarrier nsc is 3-carrier scheduling of any one of 0 to 2, 3 to 5, 6 to 8, and 9 to 11; $I_{sc}$=16-17 indicates that the scheduled subcarrier is 6-carrier scheduling of any one of 0 to 5 and 6 to 11; and $I_{sc}$=18 indicates that the scheduled subcarrier is 12-carrier scheduling of 0 to 11. Therefore, $I_{sc}$>11 indicates multi-carrier scheduling (>1). The number of RUs indicates a number of transmitted subframes. MCS states "000"-"010" (MCS indexes 0 to 2) indicate the QPSK (the second modulation scheme), or indicates Pi/2 BPSK (the second modulation scheme) and Pi/4 QPSK (a third modulation scheme). "011"-"111" (MCS indexes 3 to 7) are reserved.

In view of this, when the first message indicates the first modulation scheme and the MCS index of the first modulation scheme, or indicates the second modulation scheme and the MCS index of the second modulation scheme, a corresponding indication manner may be shown in Table 5.2.

**Table 5.2**

| MCS Index $I_{MCS}$ | Modulation $\Delta f$ = 3.75 kHz or $\Delta f$ =15 kHz and $I_{sc}$ = 0,1,...,11 | Modulation $\Delta f$ =15 kHz and $I_{sc}$ >11 | Number of RUs $N_{RU}$ | TBS |
|---|---|---|---|---|
| '000' | pi/2 BPSK | QPSK | 4 | 88 bits |
| '001' | pi/4 QPSK | QPSK | 3 | 88 bits |
| '010' | pi/4 QPSK | QPSK | 1 | 88 bits |
| '011' | reserved | 16QAM | 4 | 88 bits |
| '100' | reserved | 16QAM | 3 | 88 bits |
| '101' | reserved | 16QAM | 1 | 88 bits |
| '110' | reserved | reserved | reserved | reserved |
| '111' | reserved | reserved | reserved | reserved |

When the subcarrier spacing is 15 kHz and $I_{sc}$>11, as shown in Table 5.2, the MCS states "000"-"010" (the MCS indexes 0 to 2) still indicate the QPSK (the second modulation scheme), and "011"-"101" indicate the 16QAM (the first modulation scheme).

In a possible case, before sending the first message, the network device further receives a fourth message sent by the terminal. The fourth message includes a preamble sequence used by the terminal to perform random access. Then, the network device can determine, based on a modulation scheme corresponding to the first message, the modulation scheme indicated by the first indication information.

In other words, the random access preamble sequence (the Msg 1) sent by the terminal device to the network device is a preamble sequence corresponding to the first modulation scheme or a preamble sequence corresponding to the second modulation scheme, so that after receiving the preamble sequence, the network device may determine a modulation scheme supported by the terminal for data transmission. Further, the network device may determine how the first indication information indicates the modulation scheme. In a possible case, the first indication information may indicate the terminal to use a modulation scheme corresponding to the Msg 1, or may indicate the terminal to use a modulation scheme different from that corresponding to the Msg 1. When sending the RRC connection establishment request message (the Msg 3), the terminal sends the Msg 3 based on an indicated modulation scheme, and/or when receiving the message for carrying the contention resolution identifier (the Msg 4), the terminal demodulates the Msg 4 based on an indicated modulation scheme. This is not limited in this embodiment of this application.

In a possible case, the random access preamble sequence sent by the terminal to the network device is an EDT preamble sequence. In other words, the terminal corresponds to an EDT transmission mode, and the terminal may send uplink data in a process of sending the RRC connection establishment request (the Msg 3). In this case, after receiving the first indication information sent by the network device by using the first message, the terminal sends the second message to the network device, where the second message includes the RRC connection establishment request message and the uplink data sent together; and transmits the message based on the modulation scheme indicated by the first indication information and a transport block indicated by a TBS index value corresponding to the MCS field. After receiving the second message, the network device correspondingly sends the third message. In this case, in addition to the message for carrying the contention resolution identifier, the third message further includes the downlink data. The message may be transmitted based on the modulation scheme indicated by the first indication information and the transport block indicated by the TBS index value corresponding to the MCS field.

In the foregoing process, if the network device does not configure a corresponding transport block for the modulation scheme, the network device may send only configuration information to the terminal to configure the transport block. In a possible case, the network device configures a transport block only for lower-order modulation, but does not configure a transport block for a new modulation scheme. In this case, it is assumed that the first indication information indicates the terminal to use the first modulation scheme. Because the first modulation scheme is the new modulation scheme, and the terminal does not configure a transport block that may be invoked by the new modulation scheme, the network device may further send first configuration information to the terminal. The first configuration information includes a TBS value in a configurable TBS value set, and the TBS value included in the set includes at least one configurable maximum TBS value of the second modulation scheme.

For example, in an EDT transmission process, a configurable maximum TBS value corresponding to the QPSK is "1000", and the network device configures a transport block corresponding to the 16QAM for the terminal. The TBS value in the configurable TBS set in the first configuration information further specifically includes any one or more of {1192, 1352, 1544, 1736, 2024, 2280, 2536}. The network device configures, for the terminal device, any value in a TBS set corresponding to the 16QAM, so that the terminal can perform transmission on a transport block corresponding to the first modulation scheme.

After receiving the first message sent by the network device, the terminal may send the second message based on the first indication information in the first message. In other words, the terminal sends the second message based on the first modulation scheme or the second modulation scheme. It can be learned from the foregoing descriptions that the second message may be the RRC connection establishment request message. In the EDT transmission mode, the second message may further include the uplink data, and the uplink data is also transmitted based on the modulation scheme indicated by the first indication information. In addition, the first indication information further indicates an MCS field of the first modulation scheme or the second modulation scheme, and the terminal transmits data based on a corresponding modulation scheme and a transport block corresponding to a TBS index indicated by the MCS field.

Alternatively, the terminal may receive the third message sent by the network device. The third message is transmitted based on the first modulation scheme or the second modulation scheme. In the EDT transmission mode, the third message may further include the downlink data, and the downlink data may also be transmitted based on the first modulation scheme or the second modulation scheme. The network device may send the third message after or before the terminal sends the second message, or may send the third message and the second message at the same time. It is assumed that the terminal receives the third message sent by the network device. The method may further include the following step: The network device sends the third message, where the third message schedules data based on the first modulation scheme or the second modulation scheme and the MCS index corresponding to the first modulation scheme or the second modulation scheme.

It can be learned that, in this embodiment of this application, when sending the random access response to the terminal, the network device indicates the terminal to use the first modulation scheme or the second modulation scheme, to trigger the RRC connection establishment request information or the message for carrying the contention resolution identifier to use the first modulation scheme (the new modulation scheme) in a subsequent random access process, that is, the first modulation scheme is supported. This can effectively improve an information transmission rate and spectrum resource utilization in the random access process. In addition, the preamble sequence is the EDT preamble sequence. In this case, the received second message further includes the uplink data in addition to the RRC connection establishment request information; and the third message may further include the downlink data in addition to the message for carrying the contention resolution identifier (the Msg 4). The second message or the third message is transmitted based on the first modulation scheme, to increase a transmission rate of uplink data or downlink data included in the second message or the third message.

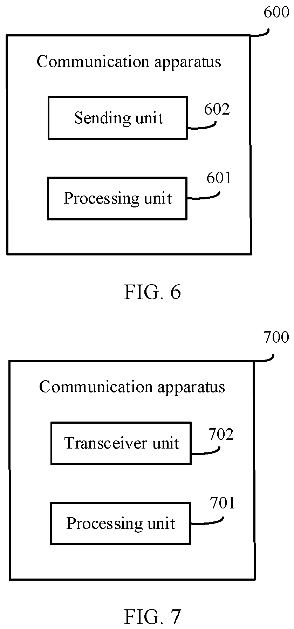

FIG. 6 shows a communication apparatus 600 according to an embodiment of this application. The communication apparatus 600 may be configured to perform the data transmission methods and specific embodiments that are applied to the network device in FIG. 2A to FIG. 2D. In a possible implementation, as shown in FIG. 6, the communication apparatus 600 includes a processing unit 601 and a sending unit 602.

The processing unit 601 is configured to generate downlink control information DCI. The DCI can indicate a first modulation scheme or a second modulation scheme, or can indicate only a second modulation scheme. The DCI includes a modulation and coding scheme MCS field. The DCI indicates the first modulation scheme when the MCS field is in a first state, or the DCI indicates the second modulation scheme and an MCS index of the second modulation scheme when the MCS field is in a second state.

The sending unit 602 is configured to send the DCI.

For a process in which the processing unit 601 and the sending unit 602 perform the data transmission method, refer to specific descriptions in embodiments corresponding to FIG. 2A to FIG. 2D. Details are not described herein again.

Optionally, the processing unit 601 may be a chip, an encoder, an encoding circuit, or another integrated circuit that can implement the method in this application.

Optionally, the communication apparatus 600 may further include a receiving unit. The receiving unit and the sending unit may be independent units, or may be combined into a transceiver unit. The transceiver unit may be an interface circuit or a transceiver.

Optionally, the communication apparatus 600 may further include a storage module (not shown in the figure). The storage module may be configured to store data and/or signaling, and the storage module may be coupled to the processing unit 601, the sending unit 602, the receiving unit, or the transceiver unit. For example, the processing unit 601 may be configured to read the data and/or the signaling in the storage module, so that the signal transmission method in the foregoing method embodiments is performed.

FIG. 7 shows a communication apparatus 700 according to an embodiment of this application. The communication apparatus 700 may be configured to perform the data transmission method and specific embodiments that are applied to a terminal and that are in FIG. 2A to FIG. 2D. In a possible implementation, as shown in FIG. 7, the communication apparatus 700 includes a processing unit 701 and a transceiver unit 702.

The processing unit 701 is configured to receive downlink control information DCI. The DCI can indicate a first modulation scheme or a second modulation scheme, or can indicate only a second modulation scheme. The DCI includes a modulation and coding scheme MCS field. The DCI indicates the first modulation scheme when the MCS field is in a first state, or the DCI indicates the second modulation scheme and an MCS index of the second modulation scheme when the MCS field is in a second state.

The transceiver unit 702 is configured to receive or send data based on the DCI.

For a process in which the processing unit 701 and the transceiver unit 702 perform the data transmission method, refer to specific descriptions in embodiments corresponding to FIG. 2A to FIG. 2D. Details are not described herein again.

Optionally, the processing unit 701 may be a chip, an encoder, an encoding circuit, or another integrated circuit that can implement the method in this application.

Optionally, the transceiver unit 702 may be an interface circuit or a transceiver.

Optionally, the communication apparatus 700 may further include a storage module (not shown in the figure). The storage module may be configured to store data and/or signaling, and the storage module may be coupled to the processing unit 701 or the transceiver unit 702. For example, the processing unit 701 may be configured to read the data and/or the signaling in the storage module, so that the signal transmission method in the foregoing method embodiments is performed.

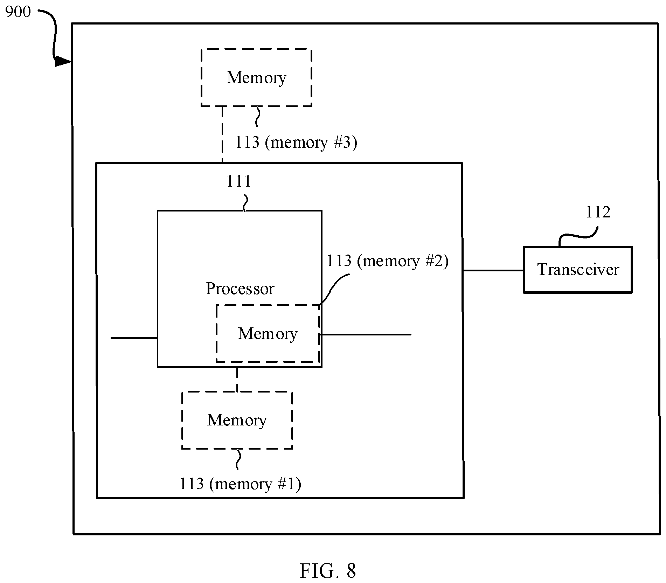

FIG. 8 is a schematic diagram of a hardware structure of a communication apparatus according to an embodiment of this application. For a structure of the communication apparatus in FIG. 6 or FIG. 7, refer to the structure shown in FIG. 8. The communication apparatus 900 includes a processor 111 and a transceiver 112. The processor 111 is electrically coupled to the transceiver 112.

The processor 111 is configured to execute some or all of computer program instructions in a memory, and when the some or all of the computer program instructions are executed, the apparatus is enabled to perform the method according to any one of the foregoing embodiments.

The transceiver 112 is configured to communicate with another device, for example, receive a message from a first network element. The message includes an identifier of a multicast and/or broadcast service, a key of a multicast and/or broadcast service, and/or a key identifier of a multicast and/or broadcast service.

Optionally, the apparatus further includes a memory 113, configured to store computer program instructions. Optionally, the memory 113 (a memory #1) is located in the apparatus, the memory 113 (a memory #2) is integrated with the processor 111, or the memory 113 (a memory #3) is located outside the apparatus.

It should be understood that the communication apparatus 900 shown in FIG. 8 may be a chip or a circuit, for example, a chip or a circuit that may be disposed in a terminal apparatus or a communication apparatus. Alternatively, the transceiver 112 may be a communication interface. The transceiver includes a receiver and a transmitter. Further, the communication apparatus 900 may include a bus system.

The processor 111, the memory 113, and the transceiver 112 are connected through the bus system. The processor 111 is configured to execute the instructions stored in the memory 113, to control the transceiver to receive a signal and send a signal, to complete the steps of the first device or the second device in the implementation method in this application. The memory 113 may be integrated into the processor 111, or may be disposed separately from the processor 111.

In an implementation, it may be considered that functions of the transceiver 112 are implemented by using a transceiver circuit or a dedicated transceiver chip. It may be considered that the processor 111 is implemented by using a dedicated processing chip, a processing circuit, a processor, or a general-purpose chip. The processor may be a central processing unit (central processing unit, CPU), a network processor (network processor, NP), or a combination of the CPU and the NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field-programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor, or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example, and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application is intended to include but is not limited to these memories and any memory of another proper type.

An embodiment of this application provides a computer storage medium, storing a computer program. The computer program is used to perform a method corresponding to a network element device like an AF/AS, a NEF/MBSF-C, an MB-SMF, or a UDR/UDM in the foregoing embodiments.

An embodiment of this application provides a computer storage medium, storing a computer program. The computer program is used to perform the method corresponding to the terminal device in the foregoing embodiments.

An embodiment of this application provides a computer program product including instructions. When the computer program product runs on a computer, the computer is enabled to perform a method corresponding to a network element device like an AF/AS, a NEF/MB SF-C, an MB-SMF, or a UDR/UDM in the foregoing embodiments.

An embodiment of this application provides a computer program product including instructions. When the computer program product runs on a computer, the computer is enabled to perform the method corresponding to the terminal device in the foregoing embodiments.

It should be understood that sequence numbers of the foregoing processes do not mean execution sequences in various embodiments of this application. The execution sequences of the processes should be determined based on functions and internal logic of the processes, but should not be construed as any limitation on the implementation processes in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, wherein the method comprises:

   generating downlink control information DCI, wherein the DCI can indicate a first modulation scheme or a second modulation scheme, or can indicate only a second modulation scheme, and the DCI comprises a modulation and coding scheme MCS field, wherein the DCI indicates the first modulation scheme when the MCS field is in a first state, or the DCI indicates the second modulation scheme and an MCS index of the second modulation scheme when the MCS field is in a second state; and
   sending the DCI.

2. The method according to claim 1, wherein the DCI further comprises a repetition field; and
   the first state is "1111", the first modulation scheme is 16 quadrature amplitude modulation QAM, and when the DCI indicates the 16QAM, the repetition field is converted into a field that indicates an MCS index of the 16QAM and that is in the DCI.

3. The method according to claim 1 or 2, wherein the DCI further comprises the repetition field, and the repetition field is N bits, wherein N is a positive integer; when the DCI can indicate the first modulation scheme or the second modulation scheme, the DCI further comprises a field indicating an MCS index of the first modulation scheme, and the field indicating the MCS index of the first modulation scheme is K bits, wherein K is a positive integer and K is less than or equal to N; and the DCI does not comprise the repetition field, or the DCI further comprises the repetition field and the repetition field is less than or equal to N-K bits.

4. The method according to claim 3, wherein K is 3 bits, and/or N is 3 bits when the DCI schedules uplink transmission, or N is 4 bits when the DCI schedules downlink transmission.

5. The method according to claim 1, wherein the DCI is control information scrambled by using a PUR-RNTI, and the DCI further comprises an acknowledgment feedback or fallback indication field.

6. The method according to claim 1 or 5, wherein the DCI is the control information scrambled by using the PUR-RNTI, and when the DCI indicates the first modulation scheme, the DCI further comprises a field indicating an MCS index of the first modulation scheme, and the DCI does not comprise a repetition adjustment field.

7. The method according to any one of claims 1 to 6, wherein the MCS field is 4 bits.

8. The method according to any one of claims 1 to 7, wherein the first state is " 1111", and the second state is a state other than 1111 and 1110 in "0000-1111".

9. The method according to any one of claims 1 to 8, wherein the first modulation scheme is the 16 quadrature amplitude modulation QAM, and the second modulation scheme is quadrature phase shift keying QPSK.

10. A data transmission method, wherein the method comprises:

    receiving downlink control information DCI, wherein the DCI can indicate a first modulation scheme or a second modulation scheme, or can indicate only a second modulation scheme, and the DCI comprises a modulation and coding scheme MCS field, wherein the DCI indicates the first modulation scheme when the MCS field is in a first state, or the DCI indicates the second modulation scheme and an MCS index of the second modulation scheme when the MCS field is in a second state; and
    receiving or sending data based on the DCI.

11. The method according to claim 10, wherein the DCI further comprises a repetition field; and
    the first state is "1111", the first modulation scheme is 16 quadrature amplitude modulation QAM, and when the DCI indicates the 16QAM, the repetition field is converted into a field that indicates an MCS index of the 16QAM and that is in the DCI.

12. The method according to claim 10 or 11, wherein the DCI further comprises the repetition field, and the repetition field is N bits, wherein N is a positive integer; when the DCI can indicate the first modulation scheme or the second modulation scheme, the DCI further comprises a field indicating an MCS index of the first modulation scheme, and the field indicating the MCS index of the first modulation scheme is K bits, wherein K is a positive integer and K is less than or equal to N; and the DCI does not comprise the repetition field, or the DCI further comprises the and the repetition field is less than or equal to N-K bits.

13. The method according to claim 12, wherein K is 3 bits, and/or N is 3 bits when the DCI schedules uplink transmission, or N is 4 bits when the DCI schedules downlink transmission.

14. The method according to claim 10, wherein the DCI is control information scrambled by using a PUR-RNTI, and the DCI further comprises an acknowledgment feedback or fallback indication field.

15. The method according to claim 10 or 14, wherein the DCI is the control information scrambled by using the PUR-RNTI, and when the DCI indicates the first modulation scheme, the DCI further comprises a field indicating an MCS index of the first modulation scheme, and the DCI does not comprise a repetition adjustment field.

16. The method according to any one of claims 10 to 15, wherein the MCS field is 4 bits.

17. The method according to any one of claims 10 to 16, wherein the first state is "1111", and the second state is a state other than 1111 and 1110 in "0000-1111".

18. The method according to any one of claims 10 to 17, wherein the first modulation scheme is the 16 quadrature amplitude modulation QAM, and the second modulation scheme is quadrature phase shift keying QPSK.

19. The method according to any one of claims 10 to 18, wherein the receiving or sending data based on the DCI comprises: receiving or sending the data based on the first modulation scheme and the MCS index of the first modulation scheme that are indicated by the DCI, or the second modulation scheme and the MCS index of the second modulation scheme that are indicated by the DCI.

20. A communication apparatus, wherein the apparatus comprises:

    a processing unit, configured to generate downlink control information DCI, wherein the DCI can indicate a first modulation scheme or a second modulation scheme, or can indicate only a second modulation scheme, and the DCI comprises a modulation and coding scheme MCS field, wherein the DCI indicates the first modulation scheme when the MCS field is in a first state, or the DCI indicates the second modulation scheme and an MCS index of the second modulation scheme when the MCS field is in a second state; and
    a sending unit, configured to send the DCI.

21. The apparatus according to claim 20, wherein the DCI further comprises a repetition field; and the first state is "1111", the first modulation scheme is 16 quadrature amplitude modulation QAM, and when the DCI indicates the 16QAM, the repetition field is converted into a field that indicates an MCS index of the 16QAM and that is in the DCI.

22. The apparatus according to claim 20 or 21, wherein the DCI further comprises the repetition field, the repetition field is N bits, wherein N is a positive integer; when the DCI can indicate the first modulation scheme or the second modulation scheme, the DCI further comprises a field indicating an MCS index of the first modulation scheme, and the field indicating the MCS index of the first modulation scheme is K bits, wherein K is a positive integer and K is less than or equal to N; and the DCI does not comprise the repetition field, or the DCI further comprises the repetition field and the repetition field is less than or equal to N-K bits.

23. The apparatus according to claim 22, wherein K is 3 bits, and/or N is 3 bits when the DCI schedules uplink transmission, or N is 4 bits when the DCI schedules downlink transmission.

24. The apparatus according to claim 20, wherein the DCI is control information scrambled by using a PUR-RNTI, and the DCI further comprises an acknowledgment feedback or fallback indication field.

25. The apparatus according to claim 20 or 24, wherein the DCI is the control information scrambled by using the PUR-RNTI, and when the DCI indicates the first modulation scheme, the DCI further comprises a field indicating an MCS index of the first modulation scheme, and the DCI does not comprise a repetition adjustment field.

26. The apparatus according to any one of claims 20 to 25, wherein the MCS field is 4 bits.

27. The apparatus according to any one of claims 20 to 26, wherein the first state is "1111", and the second state is a state other than 1111 and 1110 in "0000-1111".

28. The apparatus according to any one of claims 20 to 27, wherein the first modulation scheme is the 16 quadrature amplitude modulation QAM, and the second modulation scheme is quadrature phase shift keying QPSK.

29. A communication apparatus, wherein the apparatus comprises:

a processing unit, configured to receive downlink control information DCI, wherein the DCI can indicate a first modulation scheme or a second modulation scheme, or can indicate only a second modulation scheme, and the DCI comprises a modulation and coding scheme MCS field, wherein the DCI indicates the first modulation scheme when the MCS field is in a first state, or the DCI indicates the second modulation scheme and an MCS index of the second modulation scheme when the MCS field is in a second state; and
a transceiver unit, configured to receive or send data based on the DCI.

30. The apparatus according to claim 29, wherein the DCI further comprises a repetition field; and the first state is "1111", the first modulation scheme is 16 quadrature amplitude modulation QAM, and when the DCI indicates the 16QAM, the repetition field is converted into a field that indicates an MCS index of the 16QAM and that is in the DCI.

31. The apparatus according to claim 29 or 30, wherein the DCI further comprises the repetition field, and the repetition field is N bits, wherein N is a positive integer; when the DCI can indicate the first modulation scheme or the second modulation scheme, the DCI further comprises a field indicating an MCS index of the first modulation scheme, and the field indicating the MCS index of the first modulation scheme is K bits, wherein K is a positive integer and K is less than or equal to N; and the DCI does not comprise the repetition field, or the DCI further comprises the repetition field and the repetition field is less than or equal to N-K bits.

32. The apparatus according to claim 31, wherein K is 3 bits, and/or N is 3 bits when the DCI schedules uplink transmission, or N is 4 bits when the DCI schedules downlink transmission.

33. The apparatus according to claim 29, wherein the DCI is control information scrambled by using a PUR-RNTI, and the DCI further comprises an acknowledgment feedback or fallback indication field.

34. The apparatus according to claim 29 or 33, wherein the DCI is the control information scrambled by using the PUR-RNTI, and when the DCI indicates the first modulation scheme, the DCI further comprises a field indicating an MCS index of the first modulation scheme, and the DCI does not comprise a repetition adjustment field.

35. The apparatus according to any one of claims 29 to 34, wherein the MCS field is 4 bits.

36. The apparatus according to any one of claims 29 to 35, wherein the first state is "1111", and the second state is a state other than 1111 and 1110 in "0000-1111".

37. The apparatus according to any one of claims 29 to 36, wherein the first modulation scheme is the 16 quadrature amplitude modulation QAM, and the second modulation scheme is quadrature phase shift keying QPSK.

38. The apparatus according to any one of claims 29 to 37, wherein the transceiver unit is specifically configured to receive or send the data based on the first modulation scheme and the MCS index of the first modulation scheme that are indicated by the DCI, or the second modulation scheme and the MCS index of the second modulation scheme that are indicated by the DCI.

39. A communication apparatus, wherein the apparatus comprises a processor and an interface circuit, wherein

the interface circuit is configured to exchange code instructions with the processor; and

the processor is configured to execute a computer program or instructions stored in at least one memory, to enable the apparatus to perform the method according to any one of claims 1 to 9 or the method according to any one of claims 10 to 19.

40. A readable storage medium, configured to store instructions, wherein when the instructions are executed, the method according to any one of claims 1 to 9 or the method according to any one of claims 10 to 19 is implemented.

41. A computer program product, wherein when a computer reads and executes the computer program product, the computer is enabled to perform the method according to any one of claims 1 to 9 or the method according to any one of claims 10 to 19.

FIG. 1

Network device

Terminal

201: Generate downlink control information, where the downlink control information can indicate a first modulation scheme or a second modulation scheme, or can indicate only a second modulation scheme, the downlink control information includes a modulation and coding scheme field, and the downlink control information indicates the first modulation scheme when the modulation and coding scheme field is in a first state, or the downlink control information indicates the second modulation scheme and a modulation and coding scheme index of the second modulation scheme when the modulation and coding scheme field is in a second state

202: Send the downlink control information

203: Receive the downlink control information, and receive or send data based on the downlink control information

FIG. 2A

| MCS field | Repetition field →MCS field of 16QAM |
|---|---|
| "1111"(15) | 3 bits |

FIG. 2B

| MCS field | Acknowledgment feedback or fallback indication field | Repetition adjustment field →MCS field of 16QAM |
|---|---|---|
| "1111"(15) | 1 bit | 3 bits |

FIG. 2C

| MCS field | Subcarrier indication field | Repetition field →MCS field of 16QAM |
|---|---|---|
| "0000–1101" | 6 bits, 12 subcarriers-16QAM, 6 subcarriers-16QAM, 3 subcarriers-16QAM | 3 bits |

(a)

| MCS field | Subcarrier indication field | Repetition field →MCS field of 16QAM |
|---|---|---|
| "0000–1000" | 6 bits, 12 subcarriers-16QAM, 6 subcarriers-16QAM, 3 subcarriers-16QAM | 3 bits |

(b)

FIG. 2D

Network device

Terminal

301: Generate downlink control information, where the downlink control information is control information scrambled by using a PUR-RNTI, the downlink control information includes an acknowledgment feedback or fallback indication field, the downlink control information includes a modulation and coding scheme field, and when the modulation and coding scheme field is in a first state, the downlink control information includes a first modulation scheme indication field indicating a first modulation scheme

302: Send the downlink control information

303: Receive the downlink control information, and receive or send data based on the downlink control information

FIG. 3A

| MCS field | Acknowledgment feedback or fallback indication field | 16QAM indication field | Repetition adjustment field →MCS field of 16QAM |
|---|---|---|---|
| "1110"(14) | 1 bit | 1 bit | 3 bits |

FIG. 3B

| Network device | | Terminal |
|---|---|---|

401: Generate downlink control information, where the downlink control information includes a modulation and coding scheme MCS field and a repetition field, the downlink control information can indicate an MCS index of a first modulation scheme or an MCS index of a second modulation scheme, or can indicate only an MCS index of a second modulation scheme, and when the downlink control information indicates only the MCS index of the second modulation scheme, the MCS field is N1 bits and the repetition field is N2 bits, or when the first downlink control information indicates the MCS index of the first modulation scheme or the MCS index of the second modulation scheme, the MCS field is N1+1 bits and the repetition field is less than or equal to N2−1 bits; or the downlink control information does not include a repetition field

402: Send the downlink control information

403: Receive the downlink control information, and receive or send data based on the downlink control information

FIG. 4A

| MCS field | Repetition field |
|---|---|
| 5 bits | 2 bits |

FIG. 4B

| Network device | | Terminal |
|---|---|---|

501: Send a first message, where the first message includes first indication information that indicates the terminal to use a first modulation scheme and indicates a modulation and coding scheme MCS index corresponding to the first modulation scheme, or indicates the terminal to use a second modulation scheme and indicates an MCS index corresponding to the second modulation scheme, and the first message is a random access response message for the terminal

S502: Receive the first message

Send a second message, where the second message uses a modulation scheme indicated by the first indication information, and the second message includes a radio resource control RRC connection request

Send a third message, where the third message uses a modulation scheme indicated by the first indication information, and the third message includes a message for carrying a contention resolution identifier

FIG. 5A

| Terminal | | Network device |
|---|---|---|

Random access preamble sequence — Msg 1

Msg 2 — Random access response message

RRC connection setup request — Msg 3

Msg 4 — Message for carrying a contention resolution identifier

FIG. 5B

600

Communication apparatus

Sending unit 602

Processing unit 601

FIG. 6

700

Communication apparatus

Transceiver unit 702

Processing unit 701

FIG. 7

FIG. 8

## INTERNATIONAL SEARCH REPORT

| International application No. |
|---|
| **PCT/CN2022/085021** |

| **A.** | **CLASSIFICATION OF SUBJECT MATTER** |
|---|---|
| | H04L 27/34(2006.01)i;  H04L 1/00(2006.01)i |

According to International Patent Classification (IPC) or to both national classification and IPC

| **B.** | **FIELDS SEARCHED** |
|---|---|

Minimum documentation searched (classification system followed by classification symbols)

H04L27/-; H04L1/-

Documentation searched other than minimum documentation to the extent that such documents are included in the fields searched

Electronic data base consulted during the international search (name of data base and, where practicable, search terms used)

CNABS; CNTXT; VEN; EPTXT; WOTXT; USTXT; CNKI; 3GPP: 下行控制信息, 调制, 编码, 策略, 物联网, 窄带, 正交幅度调制, 索引, 状态, 重复次数, 带内, 域, 阶数, DCI, MCS, QAM, QPSK, TBS, modulation, NB-IoT, IB, repetition, index, coding, enhancement

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 111901280 A (ZTE CORP.) 06 November 2020 (2020-11-06) description, paragraphs 0054, 0066, 0075-0078, 0126-0138 and 0190 | 1-41 |
| X | CN 111901067 A (ZTE CORP.) 06 November 2020 (2020-11-06) description, paragraphs 0039-0043, 0064, 0076 and 0084-0088 | 1-41 |
| X | LENOVO. "Support 16QAM for NBIoT" 3GPP TSG RAN WG1 Meeting #103e R1-2008920, 02 November 2020 (2020-11-02), text, section 2 | 1-41 |
| A | CN 111670602 A (HUAWEI TECHNOLOGIES CO., LTD.) 15 September 2020 (2020-09-15) entire document | 1-41 |
| A | CN 112511268 A (ZTE CORP.) 16 March 2021 (2021-03-16) entire document | 1-41 |
| A | US 2019253121 A1 (INTEL CORPORATION) 15 August 2019 (2019-08-15) entire document | 1-41 |
| A | US 2020077381 A1 (TELEFONAKTIEBOLAGET LM ERICSSON) 05 March 2020 (2020-03-05) entire document | 1-41 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 June 2022** | **04 July 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/085021**

| Patent document cited in search report | | | Publication date (day/month/year) | Patent family member(s) | | | Publication date (day/month/year) |
|---|---|---|---|---|---|---|---|
| CN | 111901280 | A | 06 November 2020 | WO | 2021164449 | A1 | 26 August 2021 |
| CN | 111901067 | A | 06 November 2020 | WO | 2021159846 | A1 | 19 August 2021 |
| CN | 111670602 | A | 15 September 2020 | WO | 2019153267 | A1 | 15 August 2019 |
| CN | 112511268 | A | 16 March 2021 | | None | | |
| US | 2019253121 | A1 | 15 August 2019 | US | 2022038156 | A1 | 03 February 2022 |
| | | | | US | 11115098 | B2 | 07 September 2021 |
| US | 2020077381 | A1 | 05 March 2020 | WO | 2018202895 | A1 | 08 November 2018 |
| | | | | CN | 110800228 | A | 14 February 2020 |
| | | | | EP | 3635891 | A1 | 15 April 2020 |
| | | | | IN | 201917044905 | A | 22 November 2019 |
| | | | | EP | 3635891 | B1 | 23 February 2022 |
| | | | | US | 11291009 | B2 | 29 March 2022 |
| | | | | MX | 2019013064 | A1 | 05 February 2020 |

Form PCT/ISA/210 (patent family annex) (January 2015)

**EP 4 311 179 A1**

**Patent documents cited in the description**

- CN 202110362864